# EUROPEAN PATENT APPLICATION

(11) **EP 2 426 874 A1**
(43) Date of publication of application: **07.03.2012**
(21) Application number: 11173600.5
(22) Date of filing: 12.07.2011
(51) Int. Cl.: H04L 12/56

(54) **Bandwidth control method and bandwidth control device**

(30) Priority: 06.09.2010 JP 2010198459
(71) Applicant: Hitachi Ltd., Tokyo 100-8280 (JP)
(72) Inventor: Ueta, Taisuke, Tokyo, 100-8220 (JP); Endo, Hideki, Tokyo, 100-8220 (JP); Takase, Masayuki, Tokyo, 100-8220 (JP); Kanno, Takayuki, Tokyo, 100-8220 (JP)
(74) Representative: MERH-IP Matias Erny Reichl Hoffmann

(57) **Abstract**

A communication device connected to a network includes an input interface 301 that receives a frame; an output frame buffer 310 that holds the frame received by the input interface 301; multiple bandwidth controllers 1603 that controls a read request notice timing of the frame received by the input interface 301 for each flow; an output scheduler 605 that determines a read timing of the frame on the basis of the frame read request of each flow notified by the bandwidth controllers 1603; and an output interface 301 that outputs the frame in the timing notified by the output scheduler 605, and each of the bandwidth controllers 1603 determines on the basis of a token value held by each flow, whether or not the read request of the flow is notified to the output scheduler 605, and determines the amount of adding or subtracting the token value on the basis of the accumulated number of frames in the output frame buffer 310.

## Description

### FIELD OF THE INVENTION

The present invention relates to a bandwidth control method for bandwidth control of a packet network.

### BACKGROUND OF THE INVENTION

With the popularization of the Ethernet (trademark registered) large in capacity and low in price, an Ethernet leased line service is increased. The leased line service is a communication service requiring high reliability, and a carrier providing the leased line service needs to ensure a bandwidth stipulated in an SLA (service level agreement).

In the recent Ethernet leased line service, a communication device logically multiplexes multiple users to reduce system architecture costs. A dedicated device (user access device) connected to a user site accommodates multiple user flows within a line, and also a repeater multiplexes multiple user access devices to reduce the number of communication devices necessary for the service.

A communication carrier providing the Ethernet leased line service allocates a reservation bandwidth to the respective user flow accommodated by the user access device located at an edge of a communication carrier network within the communication carrier network. A traffic flowing into the user access device located at the edge of the communication carrier network from the user site may instantaneously exceed the reservation bandwidth even if a mean bandwidth is the reservation bandwidth or lower. If the traffic that has exceeded the reservation bandwidth flows into the communication carrier network from multiple user sites, there is a possibility that the traffic exceeds a bandwidth of the repeater within the communication carrier network, and a frame discard occurs within the communication carrier network. In order to ensure a communication bandwidth for the reservation bandwidth within the communication carrier network with respect to the respective user flow, the communication carrier needs to always suppress the bandwidth of the traffic of the respective user flows flowing into the communication carrier network to the reservation bandwidth or lower. The communication carrier does not ensure a fluctuation of the bandwidth within the user side (that is, between a user terminal and the user access device).

In order to suppress the bandwidth of the traffic of the respective user flows flowing into the communication carrier network to the reservation bandwidth or lower, the communication carrier mounts a shaper in the user access device. That a frame discard probability within the communication carrier network is reduced by mounting the shaper in the user access device has been generally known by a queueing theory.

Japanese Unexamined Patent Application Publication No. 2009-147874 discloses that the shaper is realized by the aid of a token bucket algorithm in order to control the bandwidth for each flow. The token bucket algorithm increments a bandwidth control counter (token) at a speed corresponding to a set bandwidth, transmits a frame when a token for a frame length to be transmitted is stored, and subtracts the token for the frame length. Japanese Unexamined Patent Application Publication No. 2009-147874 discloses that the user traffic is classified into multiple flows, and a bucket depth is provided for each flow, and the bandwidth of each flow is controlled according to the token bucket algorithm of each flow. This control aims at smoothing a transmission interval of the frames in each flow to control the transmission bandwidth. When the user access device accommodates the user flows, because an output competition occurs, the user access device needs to control (schedule) the order of transmitting the frames of the respective user flows. In transmitting the frame of the user flow having the bandwidth controlled by each token bucket algorithm, the token bucket algorithm needs to wait for the frame transmission while a frame of another user flow is being transmitted. The output competition is problematic in the user access device, and the user access device needs to ensure that the transmittable bandwidth of each user flow does not fall below the reservation bandwidth.

For that reason, in the token bucket algorithm, the tokens can be accumulated up to the depth of the token bucket, and the tokens are added even during waiting for the frame transmission of another user flow. After the frame of another user flow has been transmitted, the waited frames are continuously transmitted according to the accumulated tokens. The waiting bandwidth is compensated in the future time, thereby enabling the frame transmission for the reservation bandwidth even if the output competition occurs.

### SUMMARY OF THE INVENTION

However, when the tokens are always accumulated up to the depth of the token bucket, the user frame of a single flow intermittently arrives at the communication device. When there is no output competition against another flow, the communication device continuously transmits the frame of the single flow for the accumulated number of tokens. Accordingly, there arises such a problem that the traffic that exceeds the reservation bandwidth of each flow is transmitted from the communication device.

The present invention has been made to solve the above-mentioned problems, and therefore aims at providing a bandwidth control device and a bandwidth control method in which if there occurs an output competition of multiple accommodated user flows against another flow, the frames in the reservation bandwidth of each user flow can be transmitted by the number of frames waiting due to the output competition, and if there occurs no output competition with another flow, the frames are sent in the reservation bandwidth or lower of each flow. In the above description, the token bucket algorithm is used. However, even if a leaky bucket is used, in order that the frames in the reservation bandwidth of each user flow can be transmitted by the number of waited frames when the output competition against another flow occurs, when the number of tokens is equal to or lower than a given value, the frames can be transmitted, and the number of tokens needs to be reduced to be lower than the given value. However, if the number of tokens can be always reduced to be lower than the given value, when no output competition with another flow occurs, there arises such a problem that the frames are sent beyond the reservation bandwidth of each flow due to the reduced tokens.

A typical aspect of the present invention will be described below. That is, there is provided a communication device connected to a network, including an input interface that receives a frame; an output frame buffer that holds the frame received by the input interface; multiple bandwidth controllers that control a read request notice timing of the frame received by the input interface for each flow; an output scheduler that determines a read timing of the frame on the basis of the frame read request of each flow notified by the bandwidth controllers; and/or an output interface that outputs the frame in the timing notified by the output scheduler, in which each of the bandwidth controllers determines on the basis of a token value held by each flow, whether the read request of the flow is notified the output scheduler of, or not, and/or determines the amount of adding or subtracting the token value on the basis of the accumulated number of frames in the output frame buffer.

According to an aspect of the present invention, the bandwidth control device can prevent the accommodated user flows from transmitting the frame exceeding the reservation bandwidth to the communication carrier network, and transmit the frames in the reservation bandwidth of each user flow even if the output competition occurs.

### BRIEF DESCRIPTION OF THE DRAWINGS

FIG. 1 is an illustrative diagram illustrating an example of a network system according to a first embodiment of the present invention;
FIGS. 2A and 2B are graphs showing a fluctuation of a frame amount before and after passing through a bandwidth control device according to the present invention;
FIG. 3 is a block diagram illustrating a configuration of a bandwidth control device according to the first embodiment of the present invention;
FIG. 4 is an illustrative diagram illustrating an example of a format of an in-device header added to a communication frame of the bandwidth control device according to the first embodiment of the present invention;
FIG. 5 is an illustrative diagram illustrating an example of a format of the communication frame according to the first embodiment of the present invention;
FIG. 6 is a block diagram illustrating a configuration of an output frame buffer controller according to the first embodiment of the present invention;
FIG. 7 is an illustrative diagram illustrating buffer management register information according to the first embodiment of the present invention;
FIG. 8 is a flowchart illustrating a buffer write process executed by a buffer write processor according to the first embodiment of the present invention;
FIG. 9 is a flowchart illustrating a buffer read process executed by a buffer read processor according to the first embodiment of the present invention;
FIG. 10 is a block diagram illustrating a configuration of a bandwidth controller according to the first embodiment of the present invention;
FIG. 11 is a flowchart illustrating a bandwidth control process executed by the bandwidth controller according to the first embodiment of the present invention;
FIG. 12 is an illustrative diagram illustrating an outline of a bandwidth control method according to the first embodiment of the present invention;
FIG. 13 is a block diagram illustrating a configuration of a bandwidth control device according to a second embodiment of the present invention;
FIG. 14 is an illustrative diagram illustrating a buffer management table according to the second embodiment of the present invention;
FIG. 15 is a block diagram illustrating a configuration of an output frame buffer controller according to the second embodiment of the present invention;
FIG. 16 is a flowchart illustrating a buffer write process executed by a buffer write processor according to the second embodiment of the present invention;
FIG. 17 is a flowchart illustrating a buffer read process executed by the buffer read processor according to the second embodiment of the present invention;
FIG. 18 is a block diagram illustrating a configuration of a bandwidth controller according to the second embodiment of the present invention;
FIG. 19 is a flowchart illustrating a bandwidth control process executed by the bandwidth controller according to the second embodiment of the present invention;
FIG. 20 is a block diagram illustrating a configuration of a bandwidth control device according to a third embodiment of the present invention;
FIG. 21 is a block diagram illustrating a configuration of an output frame buffer controller according to the third embodiment of the present invention;
FIG. 22 is a flowchart illustrating a buffer write process executed by a buffer write processor according to the third embodiment of the present invention;
FIG. 23 is a block diagram illustrating a configuration of a bandwidth controller according to the third embodiment of the present invention;
FIG. 24 is a flowchart illustrating a bandwidth control process executed by the bandwidth controller according to a third embodiment of the present invention;
FIG. 25 is an illustrative diagram illustrating an outline of a bandwidth control method according to a third embodiment of the present invention;
FIG. 26 is a block diagram illustrating a configuration of a bandwidth controller according to a fourth embodiment of the present invention;
FIG. 27 is a flowchart illustrating a bandwidth control process executed by the bandwidth controller according to the fourth embodiment of the present invention; and
FIG. 28 is an illustrative diagram illustrating an outline of a bandwidth control method according to the fourth embodiment of the present invention.

### DETAILED DESCRIPTION OF THE PREFERRED EMBODIMENTS

Hereinafter, embodiments of the present invention will be described with reference to the accompanying drawings.

### First Embodiment

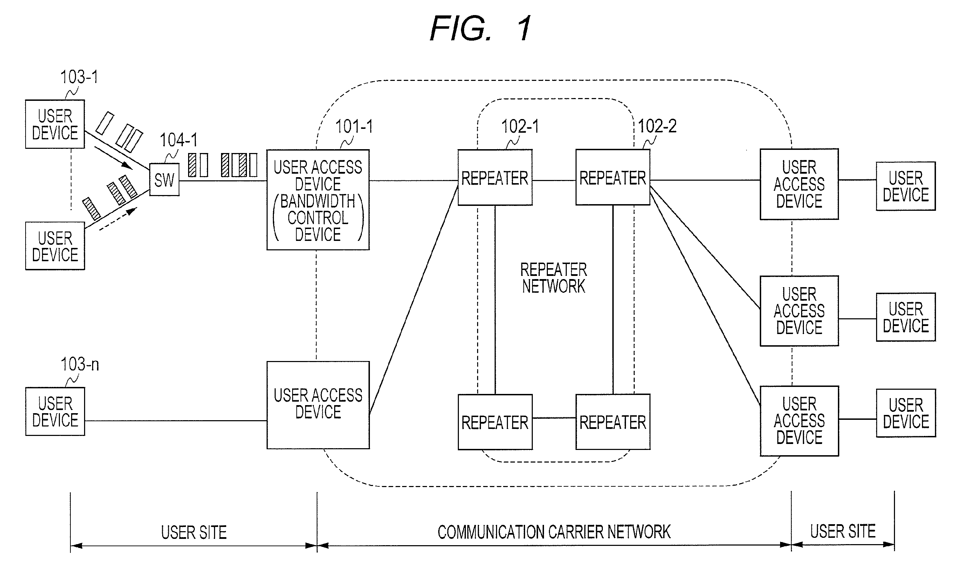

Hereinafter, a first embodiment of the present invention will be described with reference to FIGS. 1 to 12. The first embodiment described below is one embodiment of the present invention, and does not restrict the present invention.

FIG. 1 is an illustrative diagram illustrating an example of a network system applying a communication device according to the first embodiment of the present invention.

A communication carrier network includes repeaters 102-1 to 102-n, and user access devices (bandwidth control devices) 101-1 to 101-n. The repeaters 102-1 to 102-n configure a repeater network, and accommodate multiple user access devices 101-1 to 101-n. The user access devices (bandwidth control devices) 101-1 to 101n according to the first embodiment of the present invention are located at terminations of the communication carrier network, and accommodate user devices 103-1 to 103-n located at user sites. A flow transmitted from the user device is transmitted to a target user device through an SW, the user access device (bandwidth control device), the repeater, and a target user access device.

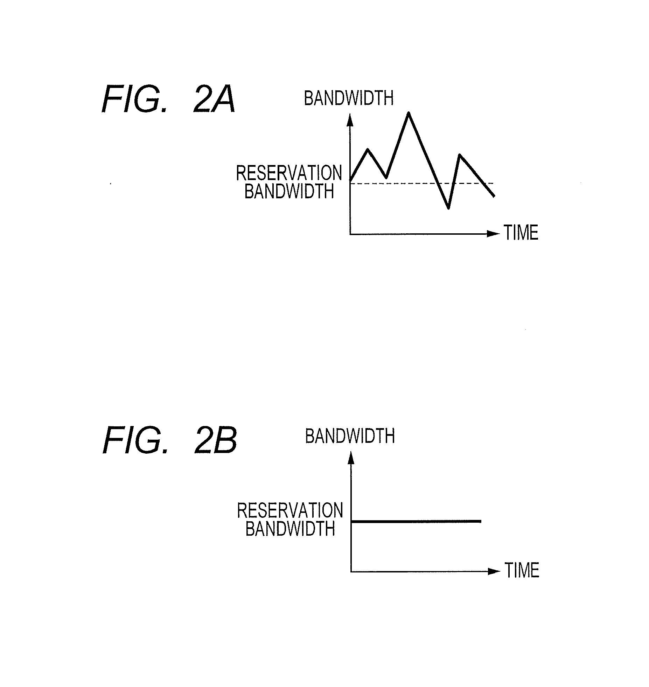

A communication carrier allocates a reservation bandwidth to each user flow accommodated by the user access device (bandwidth control device). A traffic flowing into the communication carrier network instantaneously exceeds the reservation bandwidth even if a mean bandwidth is the reservation bandwidth or lower. This appearance is illustrated in FIG. 2A. FIG. 2A illustrates a change in a transmission bandwidth of one user flow transmitted from the user device 103-1 with time. The reservation bandwidth is provided for the flow transmitted from the user device 103-1 within the communication carrier network illustrated in FIG. 1.

In the present invention, the bandwidth control device mounts a band controller (shaper) described below, and smooths a transmission interval of frames according to the reservation bandwidth of each user flow.

Hereinafter, a communication frame in the bandwidth control device according to the present invention will be described.

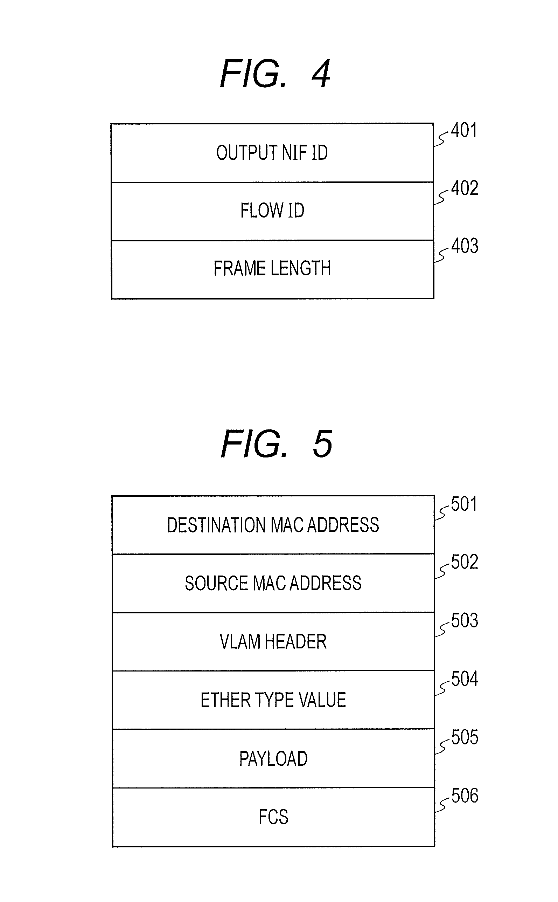

FIG. 5 is an illustrative diagram illustrating an example of a format of the communication frame according to the first embodiment of the present invention.

A communication frame 5 includes a destination MAC address 501, a source MAC address 502, a VLAM header 503, an Ether type value 504, a payload 505, and a frame check sequence (FCS) 506. The bandwidth control device 101 or a MAC address of a terminal is set for the destination MAC address 501 and the source MAC address 502. A VLAN ID, which is an identifier of the flow, is set for the VLAM header 503.

Hereinafter, a configuration of the bandwidth control device 101 will be described.

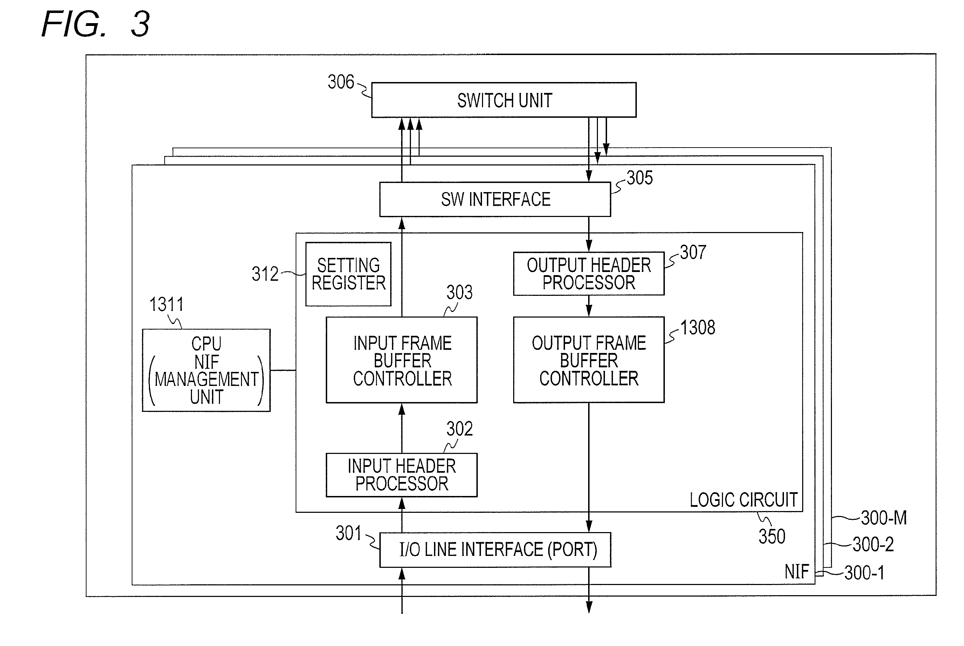

FIG. 3 is a block diagram illustrating a configuration of a bandwidth control device according to the first embodiment of the present invention.

The bandwidth control device 101 includes multiple network interface boards (NIF) 300-1 to 300- M and a switch unit 306 connected to the respective NIF 300.

Each of the NIFs 300 includes an I/O line interface 301 which is a communication port, an SW interface 305 connected to the switch unit 306, a logic circuit 350, and an NIF management unit 1311. The bandwidth control device 101 is connected to another device through those I/O line interfaces 301. In the first embodiment, the I/O line interface 301 is an Ethernet line interface.

The logic circuit 350 includes an input header processor 302 connected to the I/O line interface 301, an input frame buffer controller 303 connected to the input header processor 302, an output header processor 307 connected to the SW interface 305, an output frame buffer controller 1308 connected to the output header processor 307, and a setting register 312.

The I/O line interface 301 adds an in-device header 4 to the received communication frame 5.

FIG. 4 is an illustrative diagram illustrating an example of a format of the in-device header added to the frame received by the I/O line interface 301. The in-device header 4 includes an output network interface board identifier (output NIF ID) 401, a flow ID 402, and a frame length 403. The output NIF ID 401 is an internal routing information, and the switch unit 306 transfers an input frame to a specified SW interface of a specified network interface board according to the internal routing information.

At the time of adding the in-device header 4 to the communication frame 5 received by the I/O line interface 301, the output NIF ID 401 and the flow ID 402 are blank. The input header processor 302 sets values for the output NIF ID 401 and the flow ID 402.

The input header processor 302 discriminates the flow of each input frame (the communication frame 5 to which the in-device header 4 is allocated) on the basis of the VLAM header 503 of the received frame, executes processing of a VLAN tag according to the discriminated flow, and adds the output NIF ID 401 and the flow ID 402 to the in-device header 4. The processing of the VLAN tag is transmission, conversion, allocation and deletion of the VLAN tag.

The input header processor 302 may overwrite values set in the I/O line interface 301 on the destination MAC address 501 and the source MAC address 502, or may overwrite values registered for each flow in advance thereon.

After processing the VLAN tag and adding the output NIF ID 401 and the flow ID 402 to the in-device header 4, the input header processor 302 transfers the input frame to the input frame buffer controller 303.

Upon receiving the input frame from the input header processor 302, the input frame buffer controller 303 stores the frame in an input frame buffer 304. Further, the input frame buffer controller 303 reads the frame stored in the input frame buffer 304, adjusts an inter-frame gap, and transmits the frame to the SW interface 305.

After receiving the input frame from the SW interface 305 of each NIF 300, the switch unit 306 specifies the output NIF ID 401 that is a transfer destination of the received input frame. Then, the switch unit 306 transfers the received input frame as an output frame to the SW interface 305 corresponding to the specified NIF 300.

The SW interface 305 transfers the received output frame to the output header processor 307. In the first embodiment, the input header processor 302 executes the conversion of the format from the input frame to the output frame. Instead, the output header processor 307 may execute the format conversion. If the format conversion (header conversion) is conducted in the input header processor 302, the output header processor 307 transfers the output frame received from the SW interface 305 to the output frame buffer controller 1308 as it is.

The output frame buffer controller 1308 stores the output frame in an output frame buffer 310 for each flow. The output frame buffer controller 1308 reads the stored output frame from the output frame buffer 310 while shaping the output frame by the aid of information set in a buffer management register 1309 for each flow, and sends the output frame to the I/O line interface 301.

The I/O line interface 301 transfers the output frame in a format illustrated in FIG. 5 to another device after removing the in-device header 4 from the output frame.

The NIF management unit 1311 controls the setting register 312. The setting register 312 sets a register value in each block.

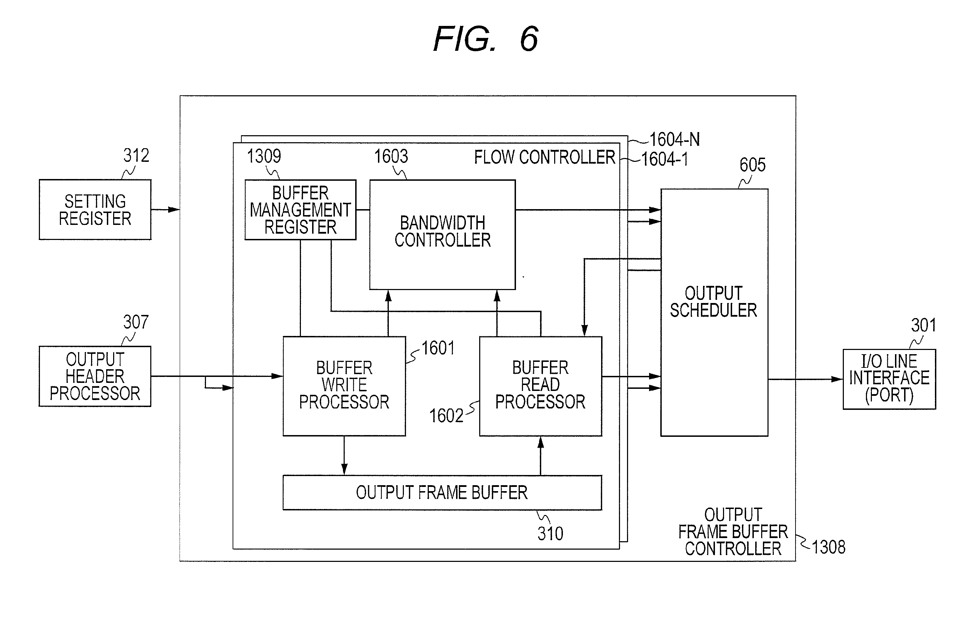

FIG. 6 is a block diagram illustrating a configuration of an output frame buffer controller according to the first embodiment of the present invention.

The output frame buffer controller 1308 includes a flow controller 1604 and an output scheduler 605.

Also, the flow controller 1604 includes a buffer write processor 1601, a buffer read processor 1602, a bandwidth controller 1603, the buffer management register 1309, and the output frame buffer 310.

Upon receiving the frame from the output header processor 307, the buffer write processor 1601 implements a buffer write process S1750 that will be described later. Upon receiving the frame, the buffer write processor 1601 discriminates the flow on the basis of the flow ID 402 of an internal header in the frame. If the frame is to be processed by its own flow controller, the buffer write processor 1601 stores the frame in the output frame buffer 310, and updates the buffer management register 1309. The bandwidth controller 1603 implements a bandwidth control process S1950 that will be described later, and transmits a transmission request to the output scheduler 605.

Upon receiving the transmission request from the bandwidth controller 1603 of each flow controller (1604-1 to 1604-N), the output scheduler 605 schedules the frame to be read. The output scheduler 605 transmits the transmission request to the buffer read processor 1602 of each flow controller 1604 (1604-1 to 1601-N), and sends the frame received from the buffer read processor 1602 to the I/O line interface 301.

Upon receiving the frame transmission request from the output scheduler 605, the buffer read processor 1602 implements a buffer read process S1850 that will be described later. The buffer read processor 1602 transmits the frame read from the output frame buffer 310 to the output scheduler 605, updates the buffer management register 1309, and transmits a read notice and a read frame length notice to the bandwidth controller 1603.

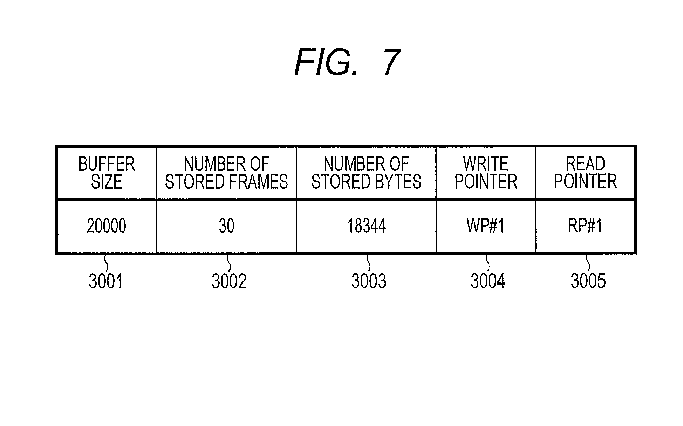

FIG. 7 is an illustrative diagram illustrating a buffer management register information according to the first embodiment of the present invention. The buffer management register 1309 includes, as a buffer management register information 30, a buffer size 3001, the number of stored frames 3002, the number of stored bytes 3003, a write pointer 3004, and a read pointer 3005. In this example, the buffer size 3001 is indicative of an operational buffer size, the number of stored frames 3002 is indicative of the number of frames stored in a buffer, the number of stored bytes 3003 is indicative of the number of bytes stored in the buffer, the write pointer 3004 is indicative of a write start address of the buffer, and the read pointer 3005 is indicative of a read start address of the buffer. Hereinafter, the buffer write process S1750 executed by the buffer write processor 1601 will be described.

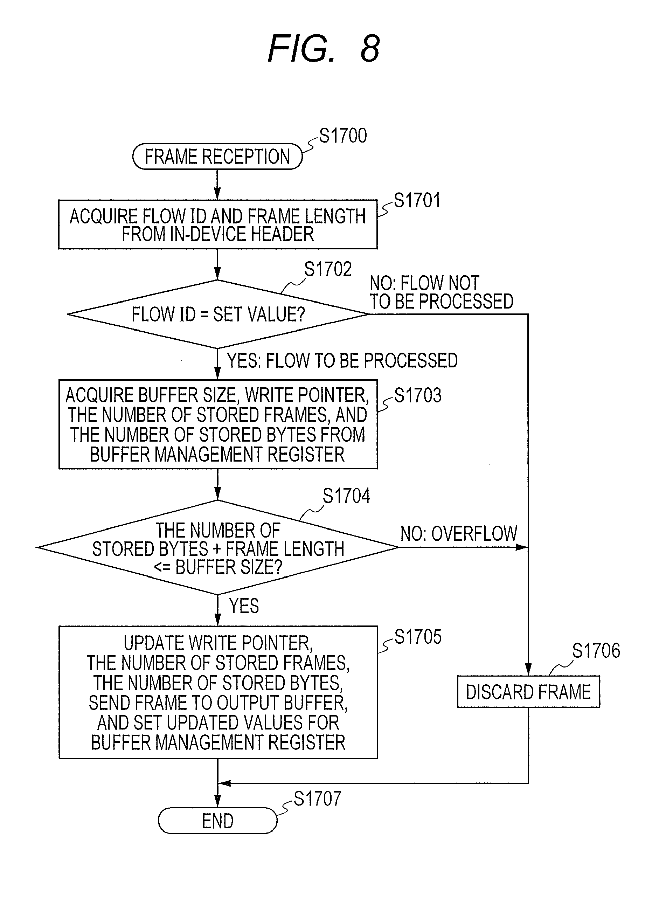

FIG. 8 is a flowchart illustrating the buffer write process executed by the buffer write processor according to the first embodiment of the present invention.

Upon receiving the frame from the output header processor 307 (S1700), the buffer write processor 1601 acquires the flow ID 402 and the frame length 403 from the in-device header 4 (S1701).

Subsequently, the buffer write processor 1601 determines whether the acquired flow ID 402 matches the flow ID set from the setting register 312, or not (S1702).

In S1702, if the acquired flow ID 402 matches the set flow ID, the buffer write processor 1601 acquires, from the buffer management register 1309, the buffer size 3001, the write pointer 3004, the number of stored frames 3002, and the number of stored bytes 3003 (S1703).

Then, the buffer write processor 1601 compares a value resulting from adding the acquired number of stored bytes 3003 and the acquired frame length 403 with the buffer size 3001 (S1704).

In S1704, if the value resulting from adding the acquired number of stored bytes 3003 and the acquired frame length 403 is equal to or lower than the buffer size 3001, the buffer write processor 1601 updates the write pointer 3004, the number of stored frames 3002, and the number of stored bytes 3003. Then, the buffer write processor 1601 sends the frame to the output frame buffer 310, sets the respective updated values for the buffer management register 1309 (S1705), and completes the processing (S1707).

Also, in S1702, if the acquired flow ID 402 does not match the set flow ID, the flow of the frame is not to be processed, and the buffer write processor 1601 discards the frame (S1706), and completes the processing (S1707).

Also, in S1704, if the value resulting from adding the acquired number of stored bytes 3003 and the acquired frame length 403 is larger than the buffer size 3001, the buffer overflows, and the buffer write processor 1601 discards the frame (S1706) and completes the processing (S1707).

Subsequently, the buffer read process S1850 executed by the buffer read processor 1602 will be described.

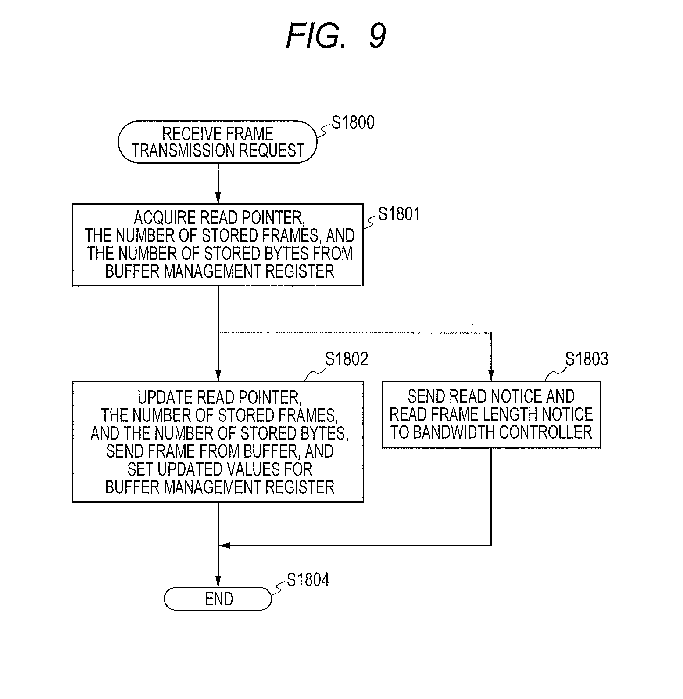

FIG. 9 is a flowchart illustrating the buffer read process executed by the buffer read processor according to the first embodiment of the present invention.

Upon receiving the frame transmission request from the output scheduler 605 (S1800), the buffer read processor 1602 acquires, from the buffer management register 1309, the read pointer 3005, the number of stored frames 3002, and the number of stored bytes 3003 (S1801).

Subsequently, the buffer read processor 1602 updates the read pointer 3005, the number of stored frames 3002 and the number of stored bytes 3003, transmits the frame from the output frame buffer 310 to the output scheduler 605, sets the respective updated values for the buffer management register 1309 (S1802), and completes the processing (S1804).

On the other hand, the buffer read processor 1602 transmits a read notice and a read frame length notice to the bandwidth controller 1603 (S1803) at the same time as the processing of S1802, and completes the processing (S1804).

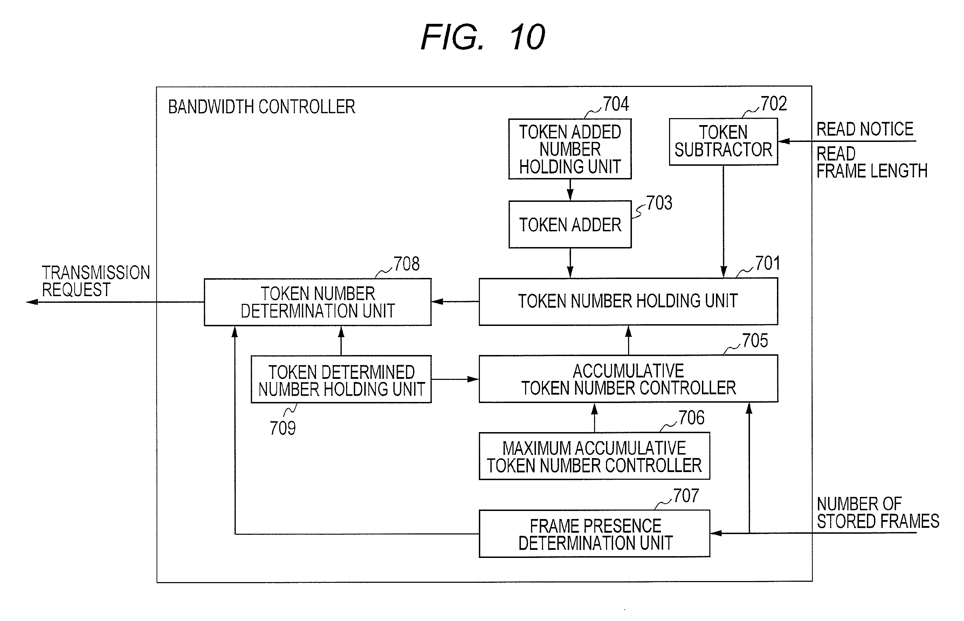

FIG. 10 is a block diagram illustrating a configuration of the bandwidth controller according to the first embodiment of the present invention.

The bandwidth controller 1603 includes a token number holding unit 701, a token subtractor 702, a token adder 703, a token added number holding unit 704, an accumulative token number controller 705, a maximum accumulative token number controller 706, a frame presence determination unit 707, a token number determination unit 708, and a token determination number holding unit 709.

The token number holding unit 701 holds a parameter (the number of tokens accumulated in a token bucket) used for a token bucket algorithm. The number of tokens accumulated in the token number holding unit 701 is subtracted on the basis of a transmission frame length (read frame length), and a given value is added to the number of tokens for a given period. The number of tokens that can be added (accumulated) by the token number holding unit 701 is controlled by the accumulative token number controller 705.

The token subtractor 702 subtracts the tokens of the number corresponding to the read frame length from the token number holding unit 701 on the basis of the frame length read from the output frame buffer 310.

The token adder 703 adds a given number of tokens in a given timing. Specifically, upon receiving a token addition signal (for example, a clock signal), the token adder 703 adds the tokens of the number held by the token added number holding unit 704.

The token added number holding unit 704 holds the number of tokens periodically added, and the number of tokens periodically added is set by the setting register 312.

The accumulative token number controller 705 controls the number of tokens added by the token number holding unit 701 on the basis of the number of stored frames 3002 in the buffer management register 1309. In the first embodiment of the present invention, as a value for controlling the token number holding unit 701 by the accumulative token number controller 705, there are used a value set in the maximum accumulative token number controller 706 if the number of stored frames is 1 or more, and a value set in the token determination number holding unit 709 if the number of stored frames is 0.

The maximum accumulative token number controller 706 holds the maximum token number (depth of the bucket) that can be added by the token number holding unit 701, and the depth of the bucket is set by the setting register 312.

The frame presence determination unit 707 determines whether the number of stored frames 3002 is larger than 0, or not, and notifies the token number determination unit 708 of the determination result.

If the token number determination unit 708 is notified of that the number of stored frames 3002 is larger than 0 by the frame presence determination unit 707, the token number determination unit 708 compares the number of tokens (token number) accumulated in the token number holding unit 701 with the number of tokens (given value) held by the token determination number holding unit 709, and sends the transmission request of the frame to the output scheduler 605 if (token number) ≥ (given value) is satisfactory.

The token determination number holding unit 709 holds the number of tokens (given value) for determining whether the token number determination unit 708 makes the transmission request from the output scheduler 605, or not. The number of tokens is set by the setting register 312.

Hereinafter, the bandwidth control process S1950 executed by the bandwidth controller 1603 will be described.

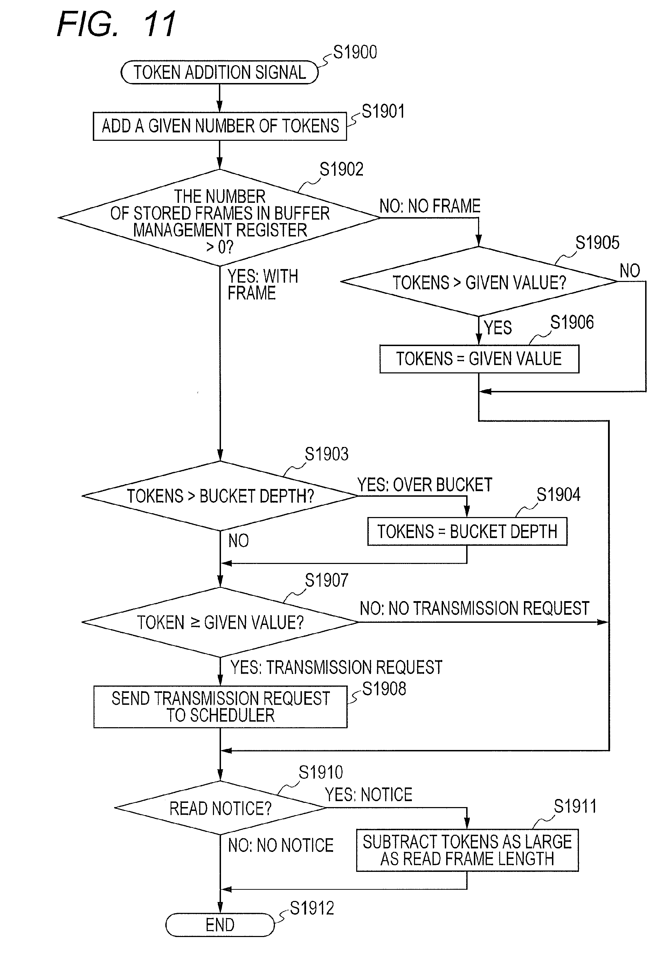

FIG. 11 is a flowchart illustrating the bandwidth control process executed by the bandwidth controller 1603 according to the first embodiment of the present invention.

Upon receiving the token addition signal in a given timing, the token adder 703 starts the processing (S1900). The token adder 703 adds a given number of tokens held by the token added number holding unit 704 to the token number holding unit 701 (S1901). The given number of tokens added in the given timing corresponds to the reservation bandwidth of each flow. The given value is set by the setting register 312 controlled by the NIF management unit 1311.

Then, the accumulative token number controller 705 acquires the number of stored frames 3002 from the buffer management register 1309, and determines whether the acquired number of stored frames 3002 is larger than 0, or not (S1902) .

If the number of stored frames 3002 is larger than 0 in S1902, the accumulative token number controller 705 determines whether the number of tokens held by the token number holding unit 701 is larger than the depth of the bucket held by the maximum accumulative token number controller 706, or not (S1903). If the number of tokens held by the token number holding unit 701 is not larger than the depth of the bucket in S1903, the accumulative token number controller 705 advances to the processing of S1907. On the other hand, if the number of tokens is larger than the depth of the bucket, the accumulative token number controller 705 sets the number of tokens held by the token number holding unit 701 to a value of the depth of the bucket (S1904), and advances to the processing of S1907. The depth of the bucket is set by the NIF management unit 1311. In this example, in S1904, the number of tokens is set to a value of the depth of the bucket whereby burst transmission equal to or larger than the number of accumulated frames corresponding to the depth of the bucket is not generated.

Then, the token number determination unit 708 determines whether the number of tokens held by the token number holding unit 701 is equal to or larger than a given value held by the token determination number holding unit 709, or not (S1907).

If the number of tokens held by the token number holding unit 701 is equal to or larger than the given value in S1907, the token number determination unit 708 transmits the transmission request to the output scheduler 605 (S1908), and advances to the processing of S1910. In this example, if the number of tokens is equal to or larger than the given value, because the number of tokens (transmission right) for transmitting the frame is held, the token number determination unit 708 determines that the frame of the flow having the monitored number of tokens can be read, and transmits the transmission request to the output scheduler 605.

On the other hand, if the number of stored frames 3002 is 0 in S1902, the accumulative token number controller 705 determines whether the number of tokens held by the token number holding unit 701 is larger than the token value held by the token determination number holding unit 709, or not (S1905) . If the number of tokens is larger than the given value in S1905, the accumulative token number controller 705 sets the number of tokens held by the token number holding unit 701 to the given value (S1906), and advances to the processing of S1910. In the first embodiment, if the number of stored frames 3002 is 0, the accumulative token number controller 705 sets the number of tokens to the given value whereby if there is no frame to be transmitted, the tokens are added up to the given value. Even if the frames intermittently arrive, the transmission intervals of the frames are smoothed, and the transmission of the frames that exceed the reservation bandwidth is suppressed.

Also, if the number of tokens is equal to or lower than the given value in S1905, the accumulative token number controller 705 advances to the processing of S1910.

Also, if the number of tokens is not larger than the given value in S1907, the accumulative token number controller 705 advances to the processing of S1910.

The token subtractor 702 determines whether there is a read notice from the buffer read processor 1602, or not (S1910) .

If there is no read notice in S1910, the accumulative token number controller 705 completes the processing (S1912). On the other hand, if there is the read notice, the token subtractor 702 subtracts the number of tokens for the read frame length from the buffer read processor 1602, from the token number holding unit 701, (S1911), and completes the processing (S1912) .

In FIGS. 10 and 11, an upper limit of the token addition is changed depending on whether the number of stored frames 3002 is 0, or not. However, if the number of stored frames exceeds the given value, the upper limit of the token addition may be changed.

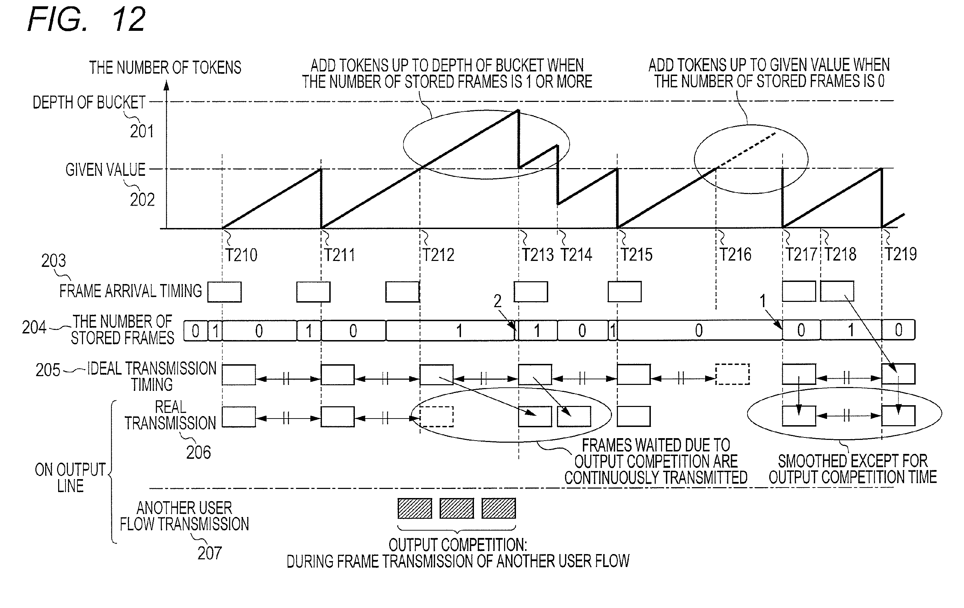

FIG. 12 is an illustrative diagram illustrating a change in the number of tokens in the token bucket and a control state of the frame due to the bandwidth control process executed by the bandwidth controller 1603 according to the first embodiment of the present invention.

In the bandwidth controller according to the present invention, the tokens are added at a speed corresponding to the reservation bandwidth set for each flow. If the number of tokens becomes the given value, the frame transmission is enabled, and if the frame is transmitted, the tokens for the frame length are subtracted (T211). As a result, an ideal transmission timing is determined with respect to a frame arrival timing. In FIGS. 2A and 2B, for simplification, the frame has a fixed length. For that reason, the ideal transmission timing becomes held constant. The ideal timing is timing when the frame is transmitted in the reservation bandwidth without being affected by another flow.

When the frame arrives at the flow controller, the bandwidth controller 1603 executes the buffer write process S1750, increments the number of stored frames in the buffer management register 1309 by 1, and stores the frame in the output frame buffer 310. In transmission of the frame (real transmission), the bandwidth controller 1603 executes the buffer read process S1850, decrements the number of stored frames in the buffer management register 1309 by 1, and reads the frame from the output frame buffer 310.

If the output competition against another flow occurs, that is, if there is no read notice in S1910 of FIG. 11, the frame transmission of the flow cannot be realized in the ideal timing, and there is a need to wait for the frame transmission of the flow until receiving the read notice from the output scheduler. For that reason, the bandwidth controller according to the present invention can add the tokens up to the depth of the bucket when the number of stored frames acquired from the buffer management register 1309 is 1 or more. As a result, after transmitting the frame of another user flow, the bandwidth controller can continuously transmit the waited frames according to the tokens accumulated during the frame transmission of another flow, and can transmit the frames for the reservation bandwidth.

This appearance will be described with reference to FIG. 12. In T212, the number of token reaches the given value, but because the read notice from the output scheduler is not received, the frames cannot be read. In this state, the determinations in S1902, S1903, S1907, S1908, S1910, and S1912 of FIG. 11 are conducted. In S1903, because the depth of the bucket is larger than the number of tokens, a limit of the number of tokens such that the number of tokens is set to the depth of the bucket is not conducted. In this case, real transmission 206 is not executed in a timing of T212. This is because the frames of another user flow are read as indicated by another user flow transmission 207. After T212, the tokens are accumulated till T213 in which the read notice is received from the output scheduler unless the number of tokens becomes larger the depth of the bucket (S1903) . If the read notice is received from the output scheduler at T213, the frame is read because a given number of tokens are held in the bucket. When the read notice is received from the output scheduler at T214, the frame is read because a given number of tokens are accumulated even in this timing. This is because the tokens are accumulated between T212 and T213. As a result, the frame for the bandwidth waited at T212 can be read at T214.

On the other hand, if the number of stored frames is 0, the tokens are added up to the given value. If the frames intermittently arrive, the frame instantaneously exceeding the reservation bandwidth arrives, the tokens are added up to the given value. As a result, even if the frames intermittently arrive, the transmission interval of the frames is smoothed, and the transmission of the frames exceeding the reservation bandwidth is suppressed. This appearance will be described with reference to FIG. 12. A given number of tokens are added from T215 to T216 where the number of tokens reaches the given value. However, the number of stored frames is 0 at T216 (from S1902 to S1905), and until the frame is received at T217, and the number of stored frame reaches 1, the number of tokens is larger than the given value in the determination of S1905. Therefore, the number of tokens is set to the given value in S1906. Accordingly, even if the frame is received in a timing of T218, because the number of accumulated tokens is smaller than the given value, the frame is not transmitted till the timing of T218, and the transmission of the frame exceeding the reservation bandwidth can be suppressed.

With the above operation, in the flow illustrated in FIG. 2A, which is transmitted from the user device 103-1 in FIG. 1, the transmission intervals of the frames are smoothed, and the transmission of the frames exceeding the reservation bandwidth is suppressed under the control of the bandwidth control device as illustrated in FIG. 2A. Therefore, according to the first embodiment, the bandwidth control device prevents the frames exceeding the reservation bandwidth from being transmitted to the communication carrier network with respect to the accommodated plural user flows, and can transmit the frames for the reservation bandwidth of each user flow even if the output competition occurs.

### Second Embodiment

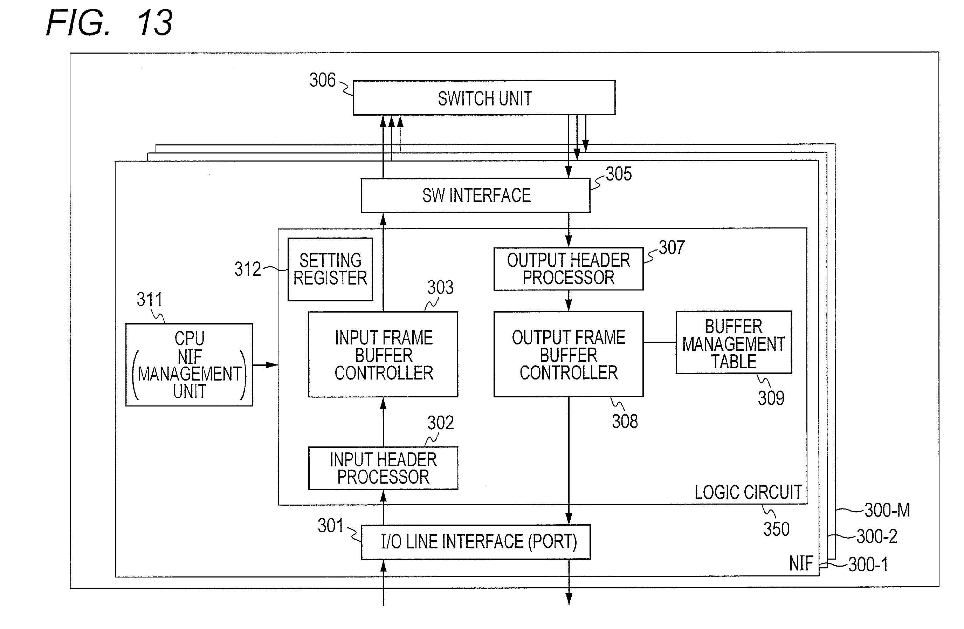

Hereinafter, a second embodiment of the present invention will be described with reference to FIGS. 13 to 19.

In the first embodiment, the bandwidth controller 1603 sets the number of tokens to the give value if the number of tokens is larger than the given value when the number of stored frames in the buffer management register 1309 is 0. In the second embodiment, a band controller 603 sets the number of tokens to a given value if there is a first frame arrival notice from a buffer write processor 601 when a frame presence flag is 1, and the number of tokens is equal to or larger than the given value.

FIG. 13 is a block diagram illustrating a configuration of a bandwidth control device according to the second embodiment of the present invention.

A band control device 3 according to the second embodiment includes not the user access device 101 and the buffer management register 1309 of the first embodiment, but a buffer management table 309, and therefore is different from that of the first embodiment in the processing of an output frame buffer controller 308 and an NIF management unit 311.

The output frame buffer controller 308 accumulates output frames in the output frame buffer 310 for each flow. The output frame buffer controller 308 reads the stored output frame from the output frame buffer 310 while shaping the output frame by the aid of information for each flow, which is set in the buffer management table 309, and sends the output frame to the I/O line interface 301. The NIF management unit 311 controls the buffer management table 309 and the setting register 312.

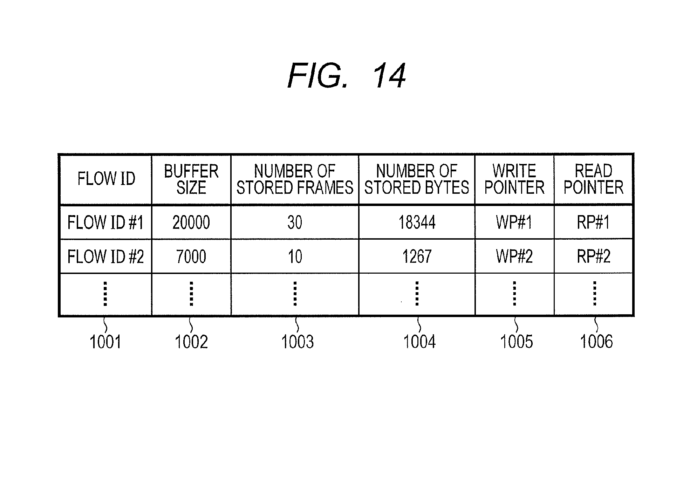

FIG. 14 is an illustrative diagram illustrating the buffer management table according to the second embodiment of the present invention.

The buffer management table 309 searches, with a flow ID 1001 as a search key, a buffer size 1002, the number of stored frames 1003, the number of stored bytes 1004, a write pointer 1005, and a read pointer 1006. In this example, the buffer size 1002 is indicative of an operational buffer size of the flow, the number of stored frames 1003 is indicative of the number of frames stored in a buffer of the flow, the number of stored bytes 1004 is indicative of the number of bytes stored in the buffer of the flow, the write pointer 1005 is indicative of a write start address of the buffer of the flow, and the read pointer 1006 is indicative of a read start address of the buffer of the flow.

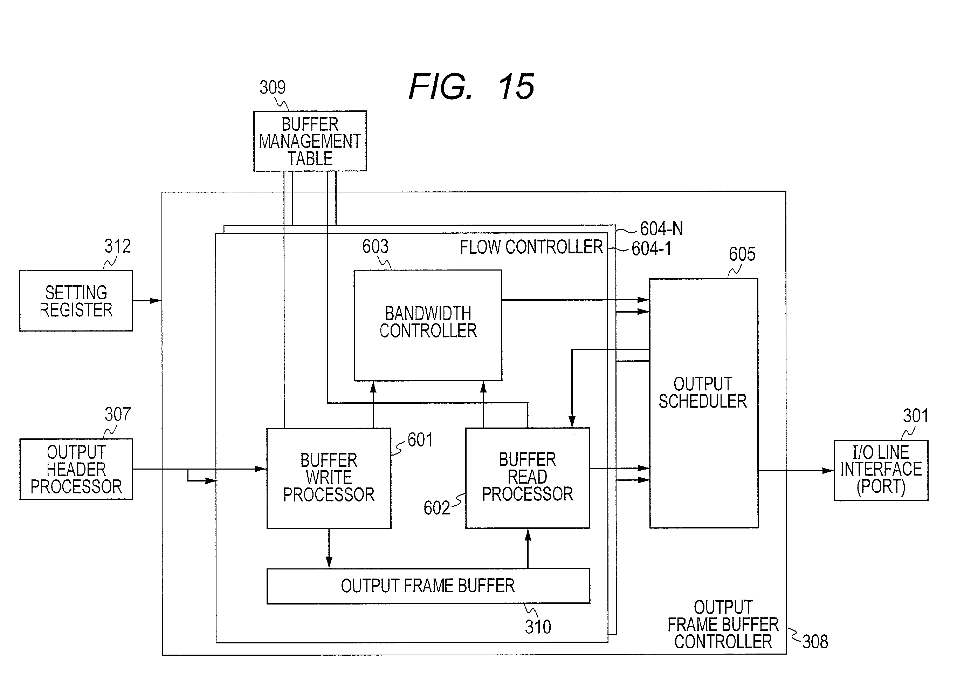

FIG. 15 is a block diagram illustrating a configuration of an output frame buffer controller according to the second embodiment of the present invention.

The output frame buffer controller 308 includes a flow controller 604 and the output scheduler 605.

Also, the flow controller 604 includes a buffer write processor 601, a buffer read processor 602, a bandwidth controller 603, and the output frame buffer 310.

Upon receiving the frame from the output header processor 307, the buffer write processor 601 implements a buffer write process S750 which will be described later. Upon receiving the frame, the buffer write processor 601 discriminates the flow, and stores the frame in the output frame buffer 310 if the frame is appropriate, updates the buffer management table 309, and notifies the bandwidth controller 603 of the frame presence flag and the first frame arrival.

The bandwidth controller 603 implements a bandwidth control process S950 that will be described later, and transmits a transmission request to the output scheduler 605.

Upon receiving the transmission request from the bandwidth controller 603 of each flow controller (604-1 to 604-N), the output scheduler 605 schedules the frame to be read. The output scheduler 605 transmits the transmission request to the buffer read processor 602 of each flow controller (604-1 to 604-N), and sends the frame received from the buffer read processor 602 to the I/O line interface 301.

Upon receiving the frame transmission request from the output scheduler 605, the buffer read processor 602 implements a buffer read process S850 that will be described later. The buffer read processor 602 transmits the frame read from the I/O line interface 301 to the output scheduler 605, updates the buffer management table 309, transmits a read notice and a read frame length notice to the bandwidth controller 603, and notifies the bandwidth controller 603 of the frame presence flag.

Hereinafter, the buffer write process (S750) executed by the buffer write processor 601 will be described.

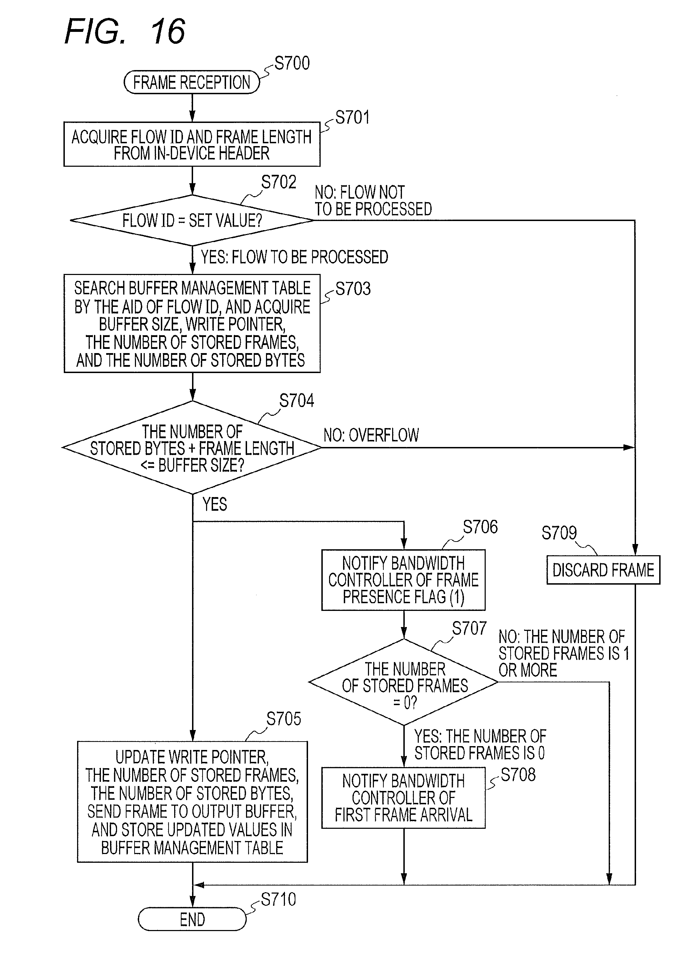

FIG. 16 is a flowchart illustrating the buffer write process executed by the buffer write processor according to the second embodiment of the present invention.

Upon receiving the frame from the output header processor 307 (S700), the buffer write processor 601 acquires the flow ID 402 and the frame length 403 from the in-device header 4 (S701).

Subsequently, the buffer write processor 601 determines whether the acquired flow ID 402 matches the flow ID set from the setting register 312, or not (S702).

If the acquired flow ID 402 matches the set flow ID in S702, the buffer write processor 601 searches the buffer management table 309, and acquires the buffer size 1002, the write pointer 1005, the number of stored frames 1003, and the number of stored bytes 1004 (S703).

Then, the buffer write processor 601 compares a value resulting from adding the acquired number of stored bytes 1004 and the acquired frame length 403 with the buffer size 1002 (S704).

If the value resulting from adding the acquired number of stored bytes 1004 and the acquired frame length 403 is equal to or lower than the buffer size 1002 in S704, the buffer write processor 601 updates the write pointer 1005, the number of stored frames 1003, and the number of stored bytes 1004. Then, the buffer write processor 601 sends the frame to the output frame buffer 310, stores the respective updated values in the buffer management table 309 (S705), and completes the processing (S710).

On the other hand, the buffer write processor 601 notifies the bandwidth controller 603 that the frame presence flag is 1, simultaneously with S705 (S706). The buffer write processor 601 determines whether the number of stored frames 1003 acquired from the buffer management table 309 is 0, or not (S707).

If the number of stored frames 1003 is 0 in S707, the buffer write processor 601 notifies the bandwidth controller 603 of a first frame arrival (S708), and completes the processing (S710).

On the other hand, if the number of stored frames 1003 is not 0, the buffer write processor 601 completes the processing (S710).

Also, if the value resulting from adding the acquired number of stored bytes 1004 and the acquired frame length 403 is larger than the buffer size 1002 in S704, the buffer overflows, and the buffer write processor 601 discards the frame (S709), and completes the processing (S710).

If the acquired flow ID 402 does match the set flow ID in S702, the flow of the flame is not to be processed, and the buffer write processor 601 discards the frame (S709), and completes the processing (S710).

Subsequently, the buffer read process (S850) executed by the buffer read processor 602 will be described.

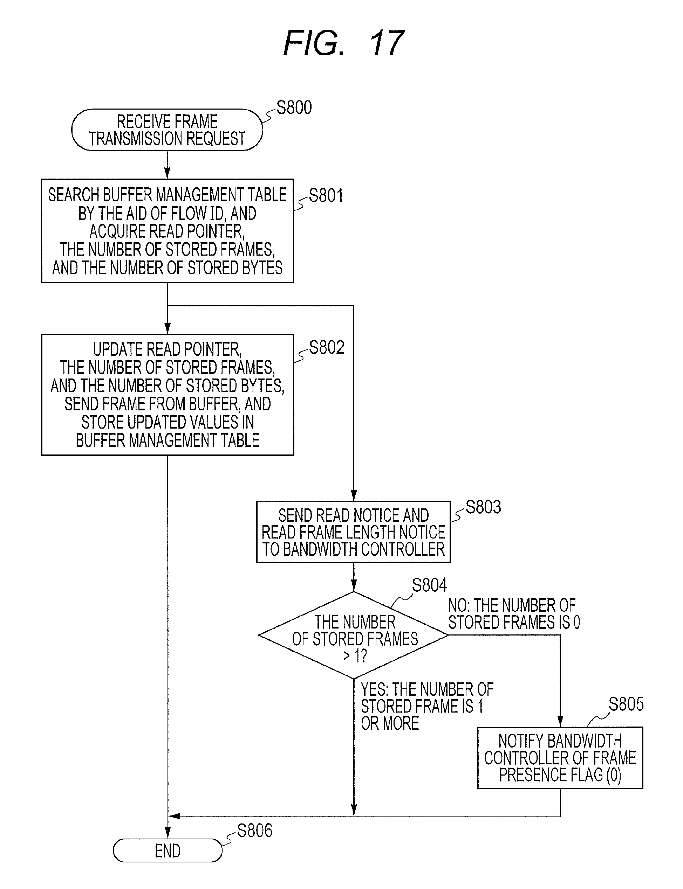

FIG. 17 is a flowchart illustrating the buffer read process executed by the buffer read processor according to the second embodiment of the present invention.

Upon receiving the frame transmission request from the output scheduler 605 (S800), the buffer read processor 602 searches the buffer management table 309 by the aid of the flow ID set from the setting register 312, and acquires the read pointer 1006, the number of stored frames 1003, and the number of stored bytes 1004 (S801).

Subsequently, the buffer read processor 602 updates the read pointer 1006, the number of stored frames 1003 and the number of stored bytes 3004, transmits the frame from the output frame buffer 310 to the output scheduler 605, stores the respective updated values in the buffer management table 309 (S802), and completes the processing (S806).

On the other hand, the buffer read processor 602 transmits a read notice to the bandwidth controller 603 simultaneously with S802 to notify the bandwidth controller 603 of the read frame length (S803).

The buffer read processor 602 determines whether the number of stored frames 1003 acquired from the buffer management table 309 is larger than 1, or not (S804).

If the number of stored frames 1003 is larger than 1 in S804, the buffer read processor 602 completes the processing (S806).

On the other hand, if the number of stored frames 1003 is larger than 1 in S804, the buffer read processor 602 notifies the bandwidth controller 603 that the frame presence flag is 0 (S805), and completes the processing (S806).

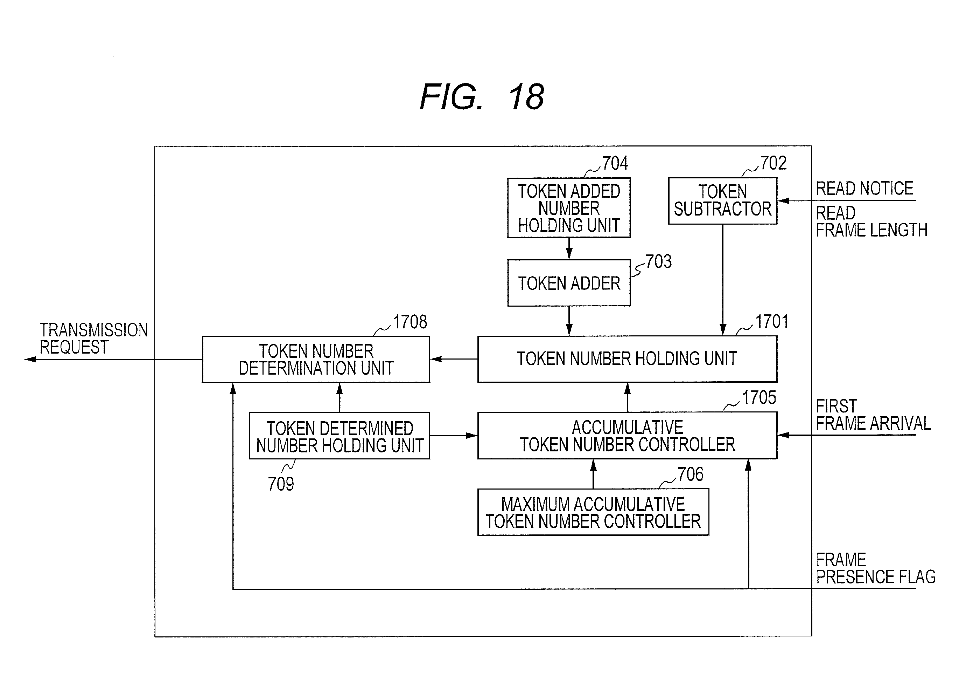

FIG. 18 is a block diagram illustrating a configuration of the bandwidth controller according to the second embodiment of the present invention.

The bandwidth controller 603 is different from the bandwidth controller 1603 of the first embodiment illustrated in FIG. 10 in the processing of a token number holding unit 1701, an accumulative token number controller 1705, and a token number determination unit 1708.

The token number holding unit 1701 holds a parameter (the number of tokens accumulated in the token bucket) used for a token bucket algorithm. The amount of tokens accumulated in the token number holding unit 1701 is subtracted on the basis of the transmission frame length (read frame length), and a given value is added to the number of tokens for a given period. The number of tokens that can be added (accumulated) by the token number holding unit 1701 is controlled by the accumulative token number controller 1705.

The accumulative token number controller 1705 sets a value set in the maximum accumulative token number controller 706 as a value for controlling the token number holding unit 1701. However, if the frame presence flag = '1' is satisfactory and there is the first frame arrival notice, the accumulative token number controller 1705 sets the value set in the token determination number holding unit 709 to a value for controlling the token number holding unit 1701. If the frame presence flag from the buffer write processor 601 is '1', the token number determination unit 1708 compares the number of tokens (token number) accumulated in the token number holding unit 1701 with the number of tokens (given value) held by the token determination number holding unit 709. If (the number of tokens) ≥ (given value) is satisfactory, the token number determination unit 1708 sends the transmission request of the frame to the output scheduler 605. Hereinafter, the bandwidth control process (S950) executed by the bandwidth controller 603 will be described.

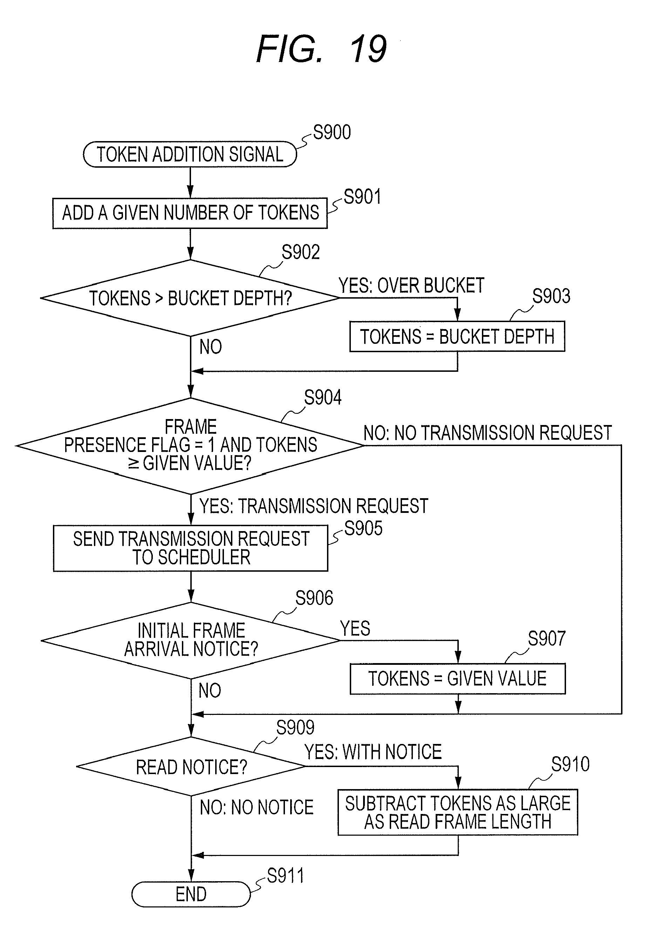

FIG. 19 is a flowchart illustrating the bandwidth control process executed by the bandwidth controller according to the second embodiment of the present invention.

Upon receiving a token addition signal in a given timing, the token adder 703 starts the processing (S900), and adds a given number of tokens held by the token added number holding unit 704 to the token number holding unit 1701 (S901).

Then, the accumulative token number controller 7105 determines whether the number of tokens held by the token number holding unit 1701 is larger than the depth of the bucket held by the maximum accumulative token number controller 1706, or not (S902). If the number of tokens held by the token number holding unit 1701 is not larger than the depth of the bucket in S902, the accumulative token number controller 1705 advances to the processing of S907. On the other hand, if the number of tokens is larger than the depth of the bucket, the accumulative token number controller 1705 sets the number of tokens held by the token number holding unit 1701 to a value of the depth of the bucket (S903), and advances to the processing of S904.

The token number determination unit 1708 determines whether the frame presence flag from the buffer write processor 601 is '1', and the number of tokens held by the token number holding unit 1701 is equal to or larger than the given value held by the token determination number holding unit 709, or not (S904).

If the frame presence flag is '1', and the number of tokens held by the token number holding unit 1701 is equal to or larger than the given value in S904, the token number determination unit 1708 transmits the transmission request to the output scheduler 605 (S905).

Subsequently, the accumulative token number controller 1705 determines whether there is the first frame arrival notice from the buffer write processor 601, or not (S906).

If there is no first frame arrival notice in S906, the accumulative token number controller 1705 advances to the processing of S909. Also, if there is the first frame arrival notice, the accumulative token number controller 1705 sets the number of tokens held by the token number holding unit 1701 to the given value (S907), and advances to the processing of S909. In the second embodiment, if there is the first frame arrival notice, the accumulative token number controller 1705 sets the number of tokens to the given value, which is the same as a case where the tokens are added up to the given value when there is no frame to be transmitted. Even if the frame intermittently arrives, the transmission intervals of the frames are smoothed, and the transmission of the frames exceeding the reservation bandwidth is suppressed.

On the other hand, if that the frame presence flag is 1, and the number of tokens held by the token number holding unit 1701 is equal to or larger than the given value, is not met, the token number determination unit 1708 advances to the processing of S909.

Then, the token subtractor 702 determines whether there is the read notice from the buffer read processor 602, or not (S909).

If there is no read notice in S909, the token subtractor 702 completes the processing (S911). On the other hand, if there is the read notice, the token subtractor 702 subtracts the number of tokens as large as the read frame length from the buffer read processor 602 from the token number holding unit 1701 (S910), and completes the processing (S911).

A change in the number of tokens in the token bucket and the control state of the frame by the bandwidth control process according to the second embodiment is the same as that of FIG. 12 described in the first embodiment. However, the change in the number of tokens from T216 to T217 is different.

The bandwidth controller 603 according to the second embodiment enables the tokens to be added up to the depth of the bucket. As a result, a change in the number of tokens from T210 to T215 is the same as that of the first embodiment. After the frame of another user flow has been transmitted, the waited frames can be continuously transmitted according to the tokens accumulated during the frame transmission of another flow, thereby enabling the frames for the reservation bandwidth to be transmitted.

If the frame presence flag = '1' is met, and there is the first frame arrival notice, the tokens are added up to the given value. When the tokens are added up to the given value, even if the frames intermittently arrive, the transmission intervals of the frames are smoothed, and the transmission of the frames exceeding the reservation bandwidths is suppressed as in the first embodiment. This appearance will be described with reference to FIG. 12.

A given number of tokens are added from T215 to T216 where the number of tokens reaches the given value. Also, the given number of tokens is added within the depth of the bucket from T216 to T217. Because the number of tokens is equal to or larger than the given value, and the frame presence flag = '1' is met, and there is the first frame arrival notice at T217 (S904 to S906), the number of tokens is set to the given value in S907. Accordingly, as in the first embodiment, even if the frame is received in a timing of T218, because the accumulated number of tokens is smaller than the given value, the frame is not transmitted till the timing of T219, and the transmission of the frames exceeding the reservation bandwidth can be suppressed.

As described above, according to the second embodiment, as in the advantages of the first embodiment, the bandwidth control device can prevent the frames exceeding the reservation bandwidth from being transmitted to the communication carrier network with respect to the accommodated plural user flows, and transmit the frames for the reservation bandwidth of each user flow even if the output competition occurs.

### Third Embodiment

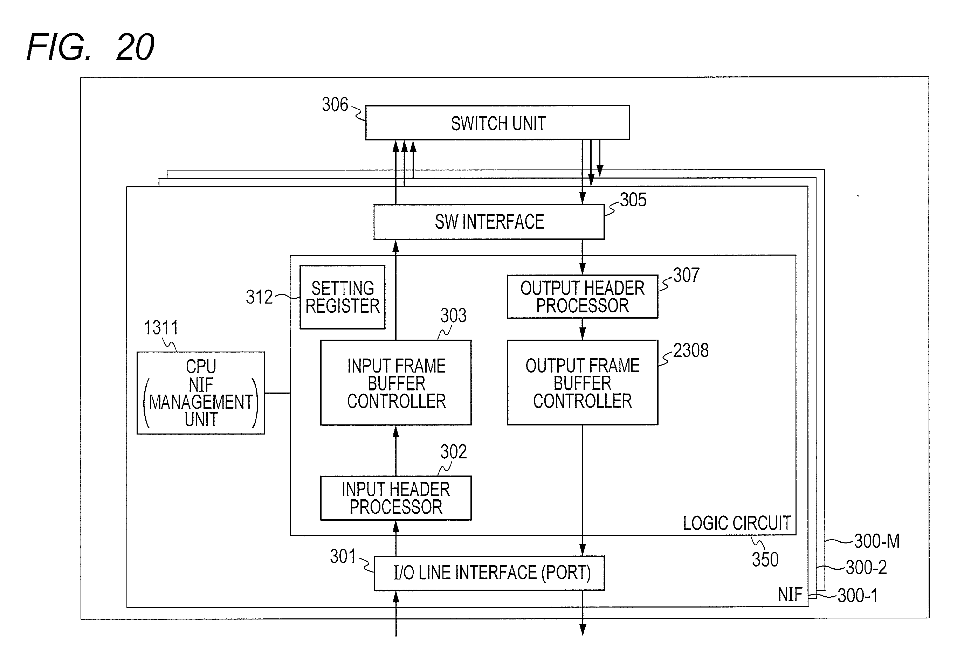

Hereinafter, a third embodiment will be described with reference to FIGS. 20 to 25.

In the first and second embodiments, when the added value of the tokens becomes the given value, the frames can be transmitted. In the third embodiment, when the number of tokens as large as the frame length to be transmitted is added, the frame transmission is enabled.

FIG. 20 is a block diagram illustrating a configuration of a bandwidth control device according to the third embodiment of the present invention.

A bandwidth control device 23 according to the third embodiment has the processing of an output frame buffer controller 2308 which is different from the processing of the user access device 101 according to the first embodiment illustrated in FIG. 3.

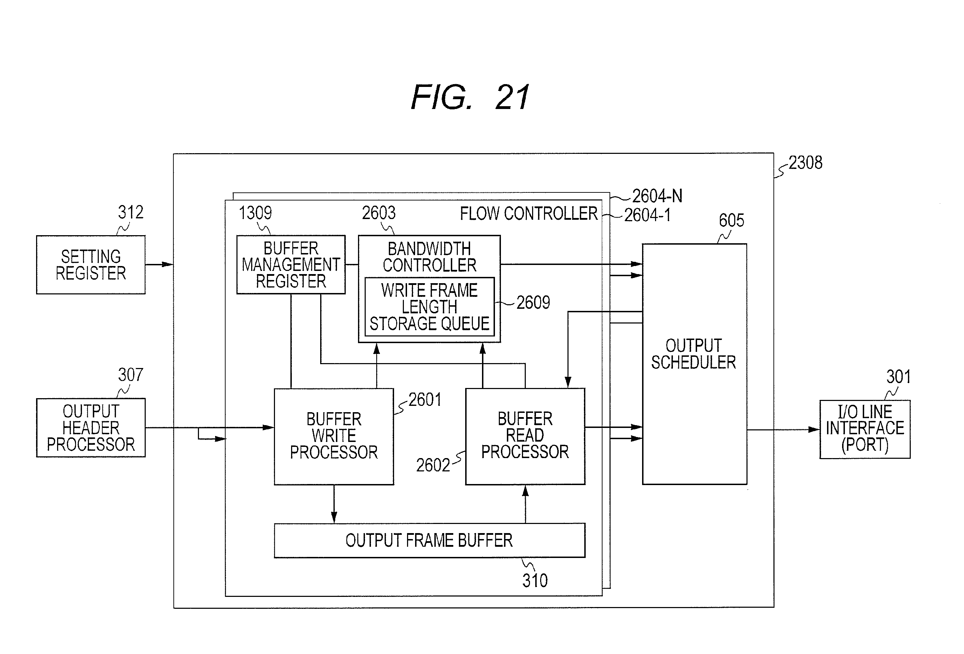

FIG. 21 is a block diagram illustrating a configuration of the output frame buffer controller according to the third embodiment of the present invention.

The output frame buffer controller 2308 includes a flow controller 2604 and the output scheduler 605.

Also, the flow controller 2604 includes a buffer write processor 2601, a buffer read processor 2602, a bandwidth controller 2603, the buffer management register 1309, and the output frame buffer 310.

Upon receiving the frame from the output header processor 307, the buffer write processor 2601 implements a buffer write process S2750 which will be described later. Upon receiving the frame, the buffer write processor 2601 discriminates the flow, and stores the frame in the output frame buffer 310 if the frame is appropriate, and updates the buffer management table 1309.

The bandwidth controller 2603 implements a bandwidth control process S2950 that will be described later, and transmits a transmission request to the output scheduler 605.

A write frame length storage queue 2609 stores information on a write frame length notified of from the buffer write processor 2601 in a buffer write process S2750 that will be described later.

Upon receiving the transmission request from the bandwidth controller 2603 of each flow controller (2604-1 to 2604-N), the output scheduler 605 schedules the frame to be read. The output scheduler 605 transmits the transmission request to the buffer read processor 2602 of each flow controller (2604-1 to 2604-N), and sends the frame received from the buffer read processor 2602 to the I/O line interface 301.

Upon receiving the frame transmission request from the output scheduler 605, the buffer read processor 2602 implements the above-mentioned buffer read process 1S850 as in the buffer read processor 1602 of the first embodiment. The buffer read processor 2602 transmits the frame read from the output frame buffer 310 to the output scheduler 605, updates the buffer management register 1309, and transmits a read notice and a read frame length notice to the bandwidth controller 2603.

Hereinafter, the buffer write process (S2750) executed by the buffer write processor 2601 will be described.

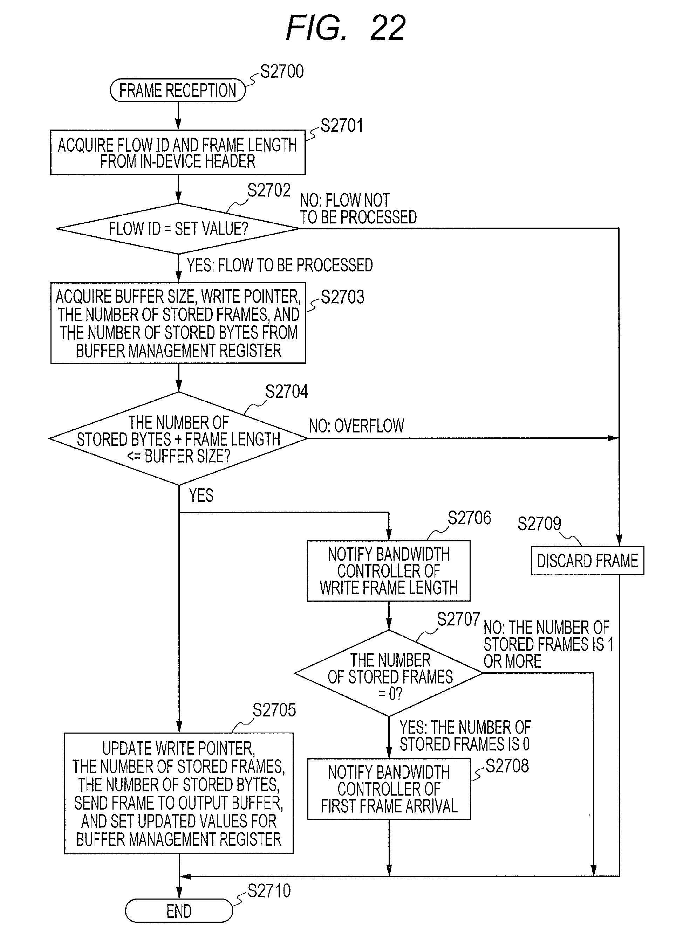

FIG. 22 is a flowchart illustrating the buffer write process executed by the buffer write processor according to the third embodiment of the present invention.

Upon receiving the frame from the output header processor 307 (S2700), the buffer write processor 2601 acquires the flow ID 402 and the frame length 403 from the in-device header 4 (S2701).

Subsequently, the buffer write processor 2601 determines whether the acquired flow ID 402 matches the flow ID set from the setting register 312, or not (S2702).

If the acquired flow ID 402 matches the set flow ID in S2702, the buffer write processor 2601 acquires the buffer size 3001, the write pointer 3004, the number of stored frames 3002, and the number of stored bytes 3003 (S2703).

Then, the buffer write processor 2601 compares a value resulting from adding the acquired number of stored bytes 3003 and the acquired frame length 403 with the buffer size 3001 (S2704).

If the value resulting from adding the acquired number of stored bytes 3003 and the acquired frame length 403 is equal to or lower than the buffer size 3003 in S2704, the buffer write processor 2601 updates the write pointer 3004, the number of stored frames 3002, and the number of stored bytes 3003. Then, the buffer write processor 2601 sends the frame to the output frame buffer 310, sets the respective updated values in the buffer management register 1309 (S2705), and completes the processing (S2710).

On the other hand, the buffer write processor 2601 notifies the bandwidth controller 2603 of the write frame length simultaneously with S2705 (S2706).

The buffer write processor 2601 determines whether the number of stored frames 3002 acquired from the buffer management register 1309 is 0, or not (S2707).

If the number of stored frames 3002 is 0 in S2707, the buffer write processor 2601 notifies the bandwidth controller 2603 of a first frame arrival (S2708), and completes the processing (S2710).

On the other hand, if the number of stored frames 3002 is not 0, the buffer write processor 2601 completes the processing (S2710).

Also, if the acquired flow ID 402 does match the set flow ID in S2702, the flow of the flame is not to be processed, and the buffer write processor 2601 discards the frame (S2709), and completes the processing (S2710).

Also, if the value resulting from adding the acquired number of stored bytes 3003 and the acquired frame length 403 is larger than the buffer size 3003 in S2704, the buffer overflows, and the buffer write processor 2601 discards the frame (S2709), and completes the processing (S2710).

The buffer read process executed by the buffer read processor 2602 is identical with the buffer read process (S1850) executed by the buffer read processor of the first embodiment.

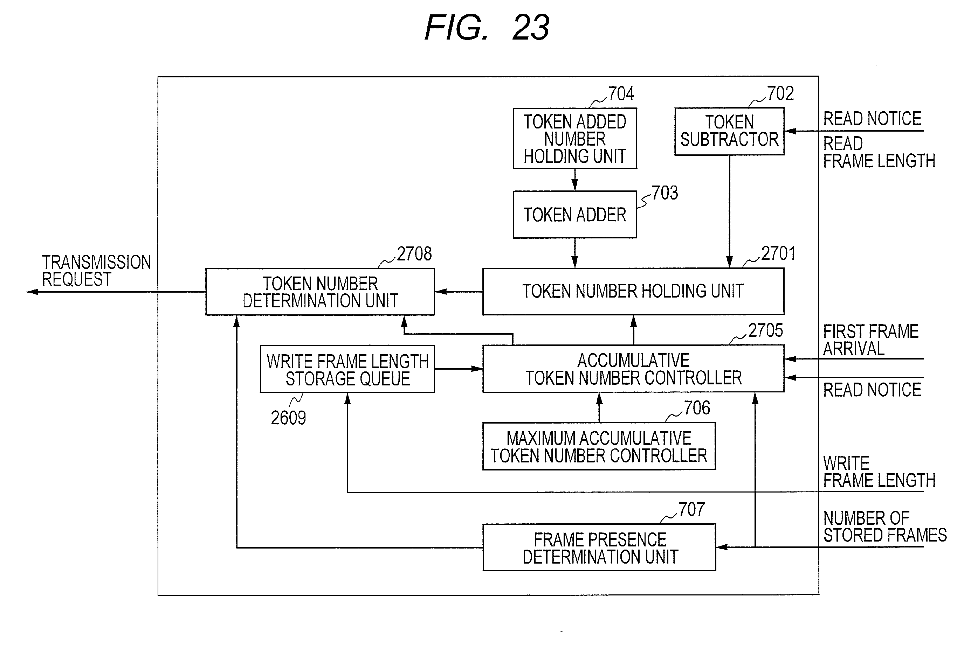

FIG. 23 is a block diagram illustrating a configuration of the bandwidth controller according to the third embodiment of the present invention.

The bandwidth controller 2603 according to the third embodiment is different from the bandwidth controller 1603 of the first embodiment illustrated in FIG. 10 in the processing of a token number holding unit 2701, an accumulative token number controller 2705, and a token number determination unit 2708. Also, the bandwidth controller 2603 does not include the token determination number holding unit 709, but includes the write frame length storage queue 2609.

The token number holding unit 2701 holds a parameter (the number of tokens accumulated in the token bucket) used for a token bucket algorithm. The amount of tokens accumulated in the token number holding unit 2701 is subtracted on the basis of the transmission frame length (read frame length), and a given value is added to the number of tokens for a given period. The number of tokens that can be added (accumulated) by the token number holding unit 2701 is controlled by the accumulative token number controller 2705.

The accumulative token number controller 2705 sets a value set in the maximum accumulative token number controller 706 as a value for controlling the token number holding unit 2701. However, if there is the first frame arrival notice, the accumulative token number controller 2705 sets the value of the frame length acquired from the write frame length storage queue 2609 to a value for controlling the token number holding unit 2701.

If the token number determination unit 2708 is notified from the frame presence determination unit 707 that the number of stored frames 3002 is larger than 0, the token number determination unit 2708 compares the number of tokens (token number) accumulated in the token number holding unit 2701 with the frame length notified of from the accumulative token number controller 2705. If (the number of tokens) ≥ (frame length) is satisfactory, the token number determination unit 2708 sends the transmission request of the frame to the output scheduler 605.

The write frame length storage queue 2609 stores information on the write frame length notified of from the buffer write processor 2601. Also, the write frame length storage queue 2609 notifies the accumulative token number controller 2705 of the information on the stored frame length.

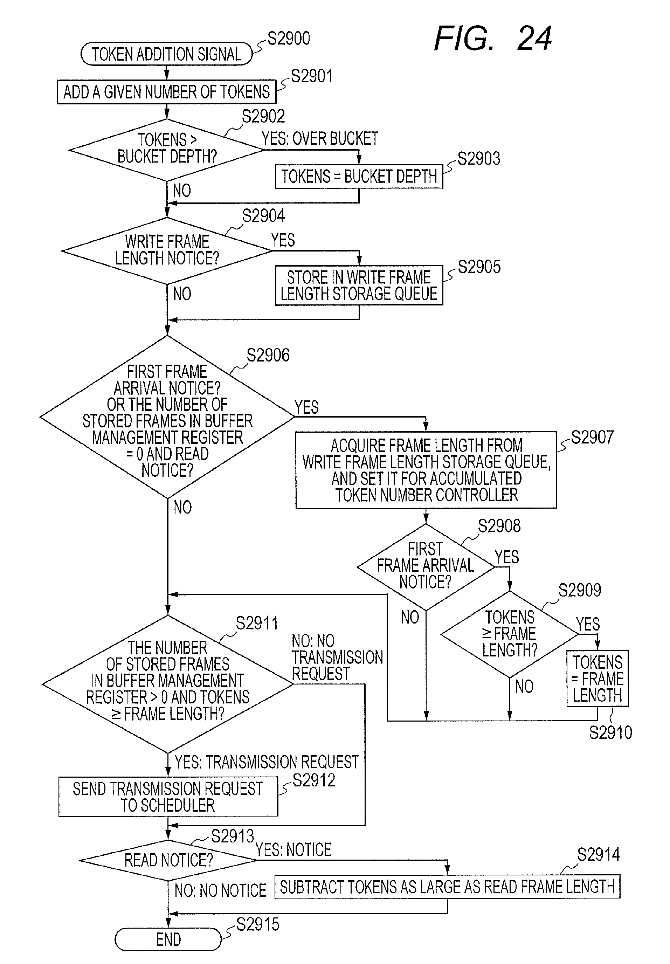

FIG. 24 is a flowchart illustrating a bandwidth control process executed by the bandwidth controller according to the third embodiment of the present invention.

Upon receiving a token addition signal in a given timing, the token adder 703 starts the processing (S2900), and adds a given number of tokens held by the token added number holding unit 704 to the token number holding unit 2701 (S2901).

Then, the accumulative token number controller 2705 determines whether the number of tokens held by the token number holding unit 2701 is larger than the depth of the bucket held by the maximum accumulative token number controller 706, or not (S2902).

If the number of tokens held by the token number holding unit 2701 is not larger than the depth of the bucket in S2902, the accumulative token number controller 2705 advances to the processing of S2904. On the other hand, if the number of tokens is larger than the depth of the bucket, the accumulative token number controller 2705 sets the number of tokens held by the token number holding unit 2701 to a value of the depth of the bucket (S2903), and advances to the processing of S2904.

Then, the write frame length storage queue 2609 determines whether there is a notice of the write frame length from the buffer write processor 2601, or not (S2904).

If there is no write frame length in S2904, the write frame length storage queue 2609 advances to the processing of S2906. On the other hand, if there is the write length notice, the write frame length storage queue 2609 stores the notified write frame length to the write frame length storage queue (S2905), and advances to the processing of S2906.

Then, the accumulative token number controller 2705 determines whether there is the first frame arrival notice from the buffer write processor 2601, or not, or whether the number of stored frames 3002 in the buffer management register is 0, and there is the read notice from the buffer read processor 2602, or not (S2906).

If there is no first frame arrival notice from the buffer write processor 2601, and the number of stored frames 3002 in the buffer management register is 0, and there is no read notice from the buffer read processor 2602 in S2906, the accumulative token number controller 2705 advances to the processing of S2911.

On the other hand, if there is the first frame arrival notice from the buffer write processor 2601, or the number of stored frames 3002 in the buffer management register is 0, and there is the read notice from the buffer read processor 2602 in S2906, the accumulative token number controller 2705 acquires the frame length from the write frame length storage queue 2609, and sets the token number holding unit 2701 as a value (frame length) for controlling the token number holding unit 2701 (S2907).

Then, the accumulative token number controller 2705 determines whether there is the first frame arrival notice from the buffer write processor 2601, or not (S2908).

If there is no first frame arrival notice in S2908, the accumulative token number controller 2705 advances to the processing of S2911. On the other hand, if there is the first frame arrival notice, the accumulative token number controller 2705 determines whether the number of tokens held by the token number holding unit 2701 is equal to or larger than the frame length, or not (S2909).

If the number of tokens is not equal to or larger than the frame length in S2909, the accumulative token number controller 2705 advances to the processing of S2911. On the other hand, if the number of tokens is not equal to or larger than the frame length, the accumulative token number controller 2705 sets the number of tokens held by the token number holding unit 2701 to the frame length (S2910), and advances to the processing of S2911.

In the third embodiment, if there the first frame arrival notice from the buffer write processor 2601, if the number of tokens is equal to larger than a computed frame length, the accumulative token number controller 2705 sets the number of frames to the computated frame length. In processing of S2914 that will be described later, because the number of tokens as large as the frame length is subtracted, this is the same as a case in which all of the accumulated tokens are used. As a result, even if the frames intermittently arrive, the transmission intervals of the frames are smoothed, and the transmission of the frames exceeding the reservation bandwidths is suppressed.

Then, the accumulative token number controller 2705 determines whether the number of stored frames 3002 in the buffer management register is larger than 0, and the number of tokens held by the token number holding unit 2701 is equal to or longer than the frame length notified of from the accumulative token number controller 2705, or not (S2911).

If the number of stored frames 3002 in the buffer management register is larger than 0, and the number of tokens held by the token number holding unit 2701 is equal to or longer than the frame length in S2911, the accumulative token number controller 2705 sends a transmission request to the scheduler (S2912), and advances to the processing of S2913. On the other hand, if the number of stored frames 3002 in the buffer management register is larger than 0, and the number of tokens is not equal to or longer than the frame length, the accumulative token number controller 2705 advances to the processing of S2913.

Subsequently, the token subtractor 702 determines whether there is a read notice from the buffer read processor 2602, or not (S2913).

If there is no read notice in S2913, the token subtractor 702 completes the processing (s2915). On the other hand, if there is the read notice, the token subtractor 702 subtracts the number of tokens as large as the read frame length notified of from the buffer read processor 2602 from the token number holding unit 2701 (S2914), and completes the processing (s2915).

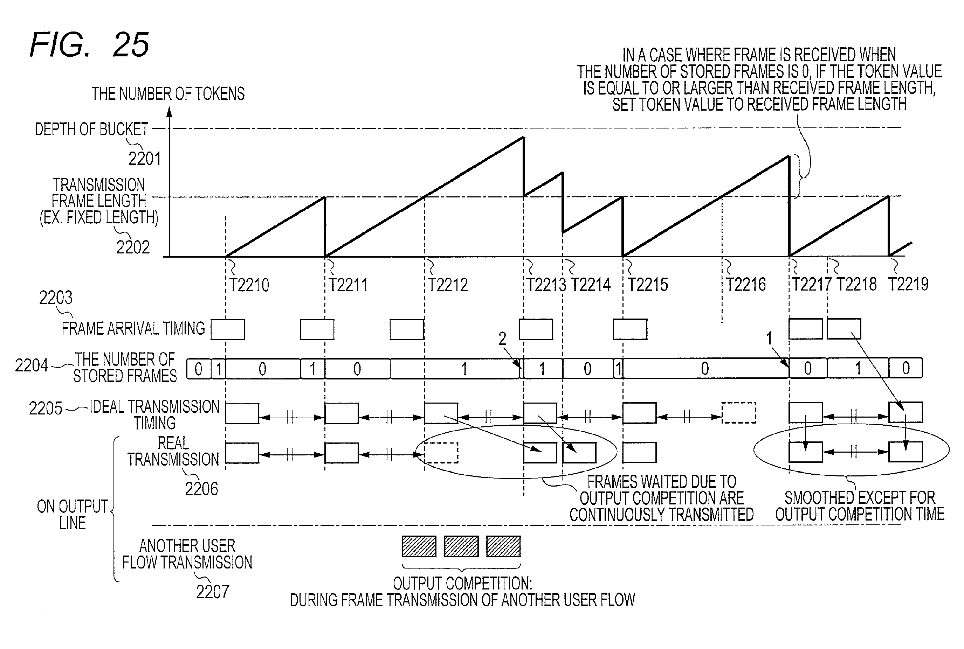

FIG. 25 is an illustrative diagram illustrating a change in the number of tokens in the token bucket and a control timing of the frame in the bandwidth controller according to the third embodiment of the present invention.

In the bandwidth controller according to the third embodiment, the tokens are added at a speed corresponding to the reservation bandwidth set for each flow. If the number of tokens as large as the frame length to be transmitted is added, the frame transmission is enabled, and if the frame is transmitted, the number of tokens as large as the frame length is subtracted (T2211). As a result, an ideal transmission timing is determined for the frame arrival timing. In FIG. 25, for simplification, the frame has a fixed length. For that reason, the ideal transmission timing becomes held constant. The ideal timing is timing when the frame is transmitted in the reservation bandwidth without being affected by another flow.

The change in the number of tokens in the token bucket and the control state of the frame in the bandwidth controller according to the third embodiment are identical with those in FIG. 12 described in the first embodiment, but the change in the number of tokens from T2216 to T2217 is different from that in FIG. 12.

The bandwidth controller 2603 according to the third embodiment can add the tokens up to the depth of the bucket. As a result, the change in the number of tokens from T2210 to T2215 is identical with that in the first embodiment. After the frame transmission of another user flow, the waited frames can be continuously transmitted according to the tokens accumulated during the frame transmission of another flow, and the frames for the reservation bandwidth can be transmitted.

If the first frame arrival notice, the tokens are added up to the frame length. When the tokens are added up to the frame length, because the tokens as large as the frame length are subtracted in reading the first arrival frame, this is the same as a case in which all of the accumulated tokens are used. As a result, as in the first embodiment, even if the frames continuously arrive, the transmission intervals of the frames are smoothed, and the transmission of the frames exceeding the reservation bandwidths is suppressed. This appearance will be described with reference to FIG. 25.

A given number of tokens are added from T2215 to T2216 where the number of tokens reaches the given value. Also, the given number of tokens is added within the depth of the bucket from T2216 to T2217. Because there is the first frame arrival notice, and the tokens are equal to or larger than the frame length at T2217 (S2908 to S2909), the tokens are set to the frame length in S2910. Accordingly, as in the first embodiment, even if the frame is received in a timing of T2218, because the accumulated number of tokens is smaller than the frame length, the frame is not transmitted till a timing of T2219, and the transmission of the frames exceeding the reservation bandwidth can be suppressed.

As described above, according to the third embodiment, as in the advantages of the first embodiment, the bandwidth control device can prevent the frames exceeding the reservation bandwidth from being transmitted to the communication carrier network with respect to the accommodated plural user flows, and transmit the frames for the reservation bandwidth of each user flow even if the output competition occurs.

### Fourth Embodiment

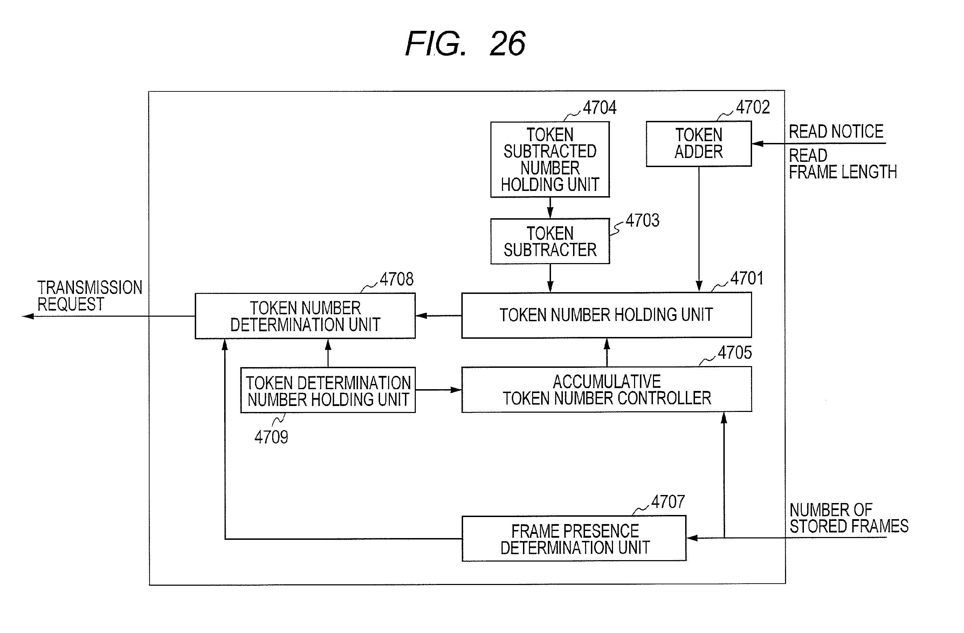

Hereinafter, a fourth embodiment of the present invention will be described with reference to FIGS. 26 to 28.

In the first, second, and third embodiments, the token bucket algorithm is used. On the other hand, in the fourth embodiment, a leaky bucket algorithm that is a method of subtracting the token is used.

A configuration of the bandwidth control device according to the fourth embodiment is identical with that in FIG. 3 described in the first embodiment. Also, the configuration of an output frame buffer controller according to the fourth embodiment is also identical with that illustrated in FIG. 6 described in the first embodiment, but a configuration of a bandwidth controller is different from that in the first embodiment.

FIG. 26 is a block diagram illustrating the configuration of the bandwidth controller according to the fourth embodiment of the present invention.

A bandwidth control device 4603 includes a token number holding unit 4701, a token adder 4702, a token subtractor 4703, a token subtracted number holding unit 4704, an accumulative token number controller 4705, a frame presence determination unit 4707, a token number determination unit 4708, and a token determination number holding unit 4709.

The token number holding unit 4701 holds a parameter (the number of tokens accumulated in the token bucket) used for a token bucket algorithm. The amount of tokens accumulated in the token number holding unit 4701 is added on the basis of the transmission frame length (read frame length), and a given value is subtracted for a given period. The number of tokens held by the token number holding unit 4701 is controlled by the accumulative token number controller 4705.

A token adder 4702 adds the tokens of the number corresponding to the read frame length from the token number holding unit 4701 on the basis of the frame length read from the output frame buffer 310.

The token subtractor 4703 adds a given number of tokens in a given timing. Specifically, upon receiving a token subtraction signal (for example, a clock signal), the token subtractor 4703 subtracts the tokens of the number held by the token subtracted number holding unit 4704.

The token subtracted number holding unit 4704 holds the number of tokens periodically subtracted, which is set by the setting register 312.

The accumulative token number controller 4705 controls the number of tokens held by the token number holding unit 4701 on the basis of the number of stored frames 3002 of the buffer management register 1309. In the fourth embodiment of the present invention, if the number of stored frames is equal to or larger than 1, the accumulative token number controller 705 sets 0 (minimum value) as a value for controlling the token number holding unit 4701. If the number of stored frames is 0, the accumulative token number controller 705 sets a value set in the token determination number holding unit 4709 as the value for controlling the token number holding unit 4701.

The frame presence determination unit 4707 determines whether the number of stored frames 3002 is larger than 0, or not, and notifies the token number determination unit 4708 of the determination result.

If the token number determination unit 708 is notified of that the number of stored frames 3002 is larger than 0 by the frame presence determination unit 4707, the token number determination unit 4708 compares the number of tokens (token number) accumulated in the token number holding unit 4701 with the number of tokens (given value) held by the token determination number holding unit 4709, and sends the transmission request of the frame to the output scheduler 605 if (token number) ≤ (given value) is satisfactory.

The token determination number holding unit 4709 holds the number of tokens (given value) for determining whether the token number determination unit 4708 makes the transmission request from the output scheduler 605, or not. The number of tokens is set by the setting register 312.

Hereinafter, a bandwidth control process (S4950) executed by a bandwidth controller 4603 will be described.

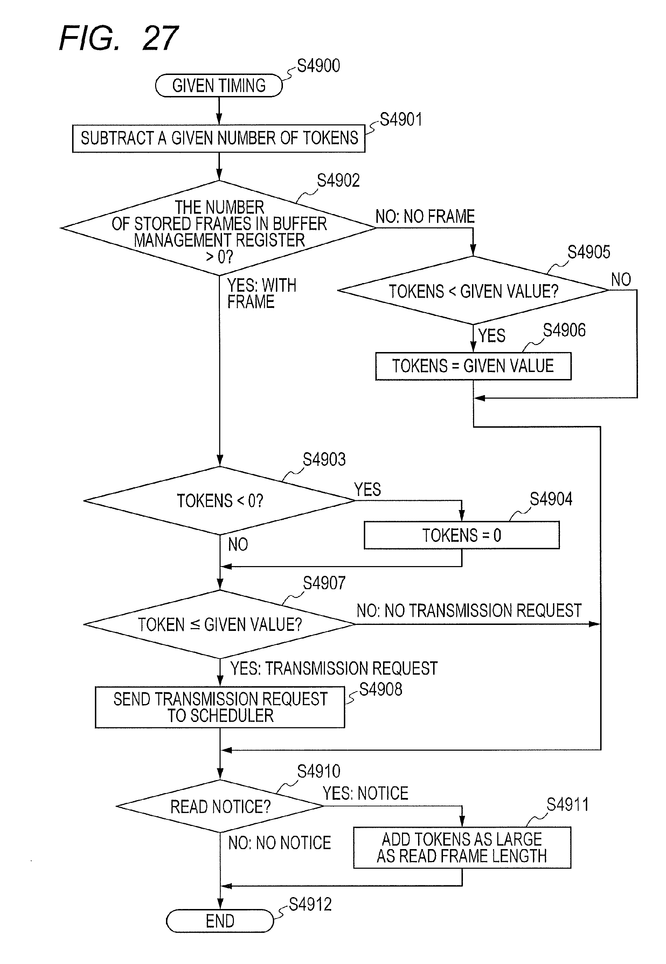

FIG. 27 is a flowchart illustrating a bandwidth control process executed by the bandwidth controller according to the fourth embodiment of the present invention.

Upon receiving the token subtraction signal in a given timing, the token subtractor 4703 starts the processing (S4900). The token subtractor 4703 subtracts a given number of tokens held by the token subtraction number holding unit 4704 from the token number holding unit 4701 (S4901). The tokens from which a given number is subtracted in the given timing correspond to the reservation bandwidth of each flow. The given number of tokens is set by the setting register 312 controlled by the NIF management unit 1311.

Then, the accumulative token number controller 4705 acquires the number of stored frames 3002 from the buffer management register 1309, and determines whether the acquired number of stored frames 3002 is larger than 0, or not (S4902).

If the number of stored frames 3002 is larger than 0 in S4902, the accumulative token number controller 4705 determines whether the number of tokens held by the token number holding unit 4701 is smaller than 0, or not (S4903). If the number of tokens held by the token number holding unit 4701 is not smaller than 0 in S4903, the accumulative token number controller 4705 advances to the processing of S4907. On the other hand, if the number of tokens is smaller than 0, the accumulative token number controller 4705 sets the number of tokens held by the token number holding unit 4701 to 0 (S4904), and advances to the processing of S4907.

Then, the token number determination unit 4708 determines whether the number of tokens held by the token number holding unit 4701 is equal to or smaller than a given value held by the token determination number holding unit 709, or not (S4907).

If the number of tokens held by the token number holding unit 4701 is equal to or smaller than the given value in S4907, the token number determination unit 4708 transmits the transmission request to the output scheduler 605 (S4908), and advances to the processing of S4910. In this example, if the number of tokens is equal to or smaller than the given value, the token number determination unit 4708 determines that the frame of the flow having the monitored number of tokens can be read, thereby enabling the continuous transmission of the frame corresponding to the number of tokens subtracted from the given value to 0.

On the other hand, if the number of stored frames 3002 is 0 in S4902, the accumulative token number controller 4705 determines whether the number of tokens held by the token number holding unit 4701 is smaller than the token value held by the token determination number holding unit 4709, or not (S4905). If the number of tokens is smaller than the given value in S4905, the accumulative token number controller 4705 sets the number of tokens held by the token number holding unit 4701 to the given value (S4906), and advances to the processing of S4910. In the fourth embodiment, if the number of stored frames 3002 is 0, the accumulative token number controller 4705 sets the number of tokens to the given value. As a result, even if the frames intermittently arrive, the transmission intervals of the frames are smoothed, and the transmission of the frames that exceed the reservation bandwidth is suppressed. Also, if the number of tokens is equal to or larger than the given value in S4905, the accumulative token number controller 4705 advances to the processing of S4910.

Also, if the number of tokens is no equal to or lower than the given value in S4907, the accumulative token number controller 4705 advances to the processing of S4950.

The token adder 4702 determines whether there is the read notice from the buffer read processor 1602, or not (S4910).

If there is no read notice in S4910, the accumulative token number controller 4705 completes the processing (S4912). On the other hand, if there is the read notice, the token adder 4702 adds the number of tokens as large as the read frame length from the buffer read processor 1602 to the token number holding unit 4701 (S4911), and completes the processing (S4912).

In FIGS. 26 and 27, the subtraction lower limit of the tokens is changed according to whether the number of storage frames 3002 is 0, or not. Alternatively, when the number of storage frames exceeds the given value, the subtraction lower limit of the tokens may be changed.

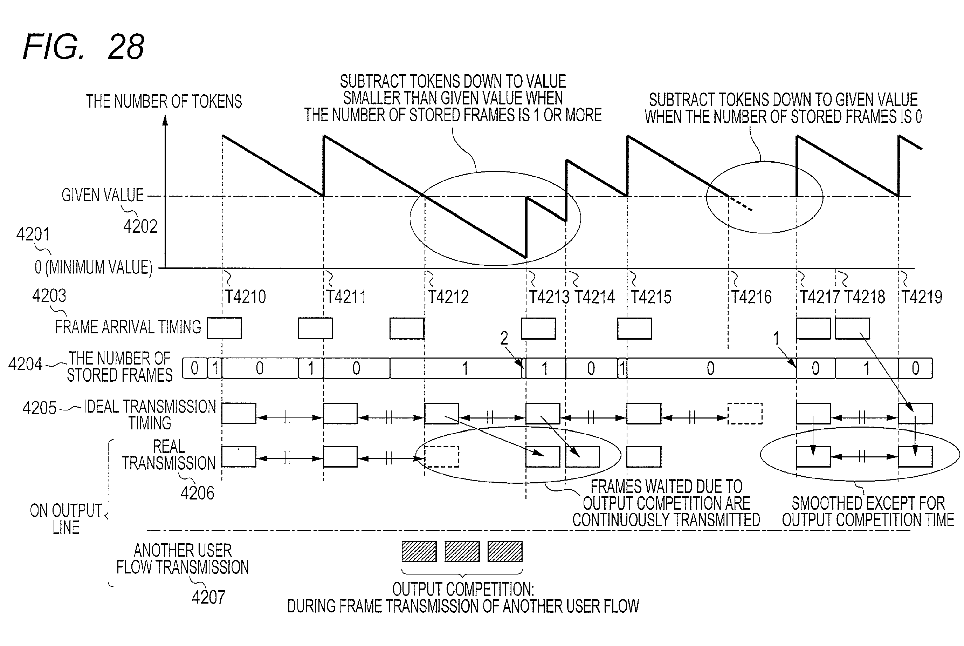

FIG. 28 is an illustrative diagram illustrating a change in the number of tokens in the token bucket and a control state of the frame due to the bandwidth control process executed by the bandwidth controller 4603 according to the fourth embodiment of the present invention, which is described with reference to FIG. 27.

In the bandwidth controller according to the present invention, the tokens are subtracted at a speed corresponding to the reservation bandwidth set for each flow. When the token reaches the given value, the frame transmission is enabled, and if the frame is transmitted, the tokens as large as the frame length are added (T4211). As a result, the ideal transmission timing is determined for the frame arrival timing. In FIG. 28, for simplification, the frame has a fixed length. For that reason, the ideal transmission timing becomes held constant. The ideal timing is timing when the frame is transmitted in the reservation bandwidth without being affected by another flow. When the frame arrives at the flow controller, the buffer write process S1750 is executed, the number of stored frames in the buffer management register 1309 is incremented by 1, and the frame is stored in the output frame buffer 310. In transmission of the frame (real transmission), the buffer read process S1850 is executed, the number of stored frames in the buffer management register 1309 is decremented by 1, and the frame is read from the output frame buffer 310. If the output competition against another flow occurs, that is, if there is no read notice in S4910 of FIG. 27, the frame transmission of the flow cannot be realized in an ideal timing, and there is a need to wait for the frame transmission of the flow until receiving the read notice from the output scheduler. For that reason, the bandwidth controller according to the present invention can subtract the number of tokens down to 0 which falls below the given value if the number of stored frames acquired from the buffer management register 1309 is equal to or larger than 1. As a result, after the frame of another user flow has been transmitted, the waited frames can be continuously transmitted according to the tokens subtracted during the frame transmission of another flow, thereby enabling the frames for the reservation bandwidth to be transmitted. This appearance will be described with reference to FIG. 28. At T4212, although the tokens are subtracted down to the given value, because the read notice from the output scheduler is not received, the frames cannot be read. This state is used for determination in S4902, S4903, S4907, S4908, S4910, and S4912 of FIG. 27. In S4903, because the number of tokens is larger than 0, the setting of the number of tokens such that the number of tokens is set to 0 is not conducted. In this case, real transmission 4206 is not executed in a timing of T4212. This is because the frame of another user flow is read as indicated by another user flow transmission 4207. The tokens are subtracted after T4212 till T4213 where the read notice is received from the output scheduler unless the number of tokens becomes smaller than 0 (S4903). Upon receiving the read notice from the output scheduler at T4213, because the tokens of the given number or lower is held in the bucket, the frame is read. Further, upon receiving the read notice from the output scheduler at T4214, because the tokens is equal to or lower than the given value even in this timing, the frame is read. This is because the tokens are subtracted even between T4212 and T4213. As a result, the bandwidth waited at T4212 can be read at T4214 as indicated by the real transmission 4206 of T4214. On the other hand, if the number of stored frames is 0, the tokens are subtracted down to the given value. When the frames intermittently arrive, the frames instantaneously exceeding the reservation bandwidth arrive. Therefore, the tokens are subtracted down to the given value, whereby even if the frames intermittently arrive, the transmission intervals of the frames are smoothed, and the transmission of the frames that exceed the reservation bandwidth is suppressed. This appearance will be described with reference to FIG. 28. The given number of tokens is subtracted from T4215 to T4216 where the tokens reach the given value. However, the number of stored frames is 0 at T4216 (S4902 to S4905), and the tokens becomes smaller than the given value in the determination of S4905 until the frames are received at T4217, and the number of stored frames become 1. Therefore, the tokens are set to the given value in S4906. Accordingly, even if the frames are received in the timing of T4218, the number of accumulated tokens is larger than the given value. Therefore, the frames are not transmitted till the timing of T4219, and the transmission of the frames exceeding the reservation bandwidth can be suppressed.

Therefore, according to the fourth embodiment, the bandwidth control device can prevent the frames exceeding the reservation bandwidth from being transmitted to the communication carrier network with respect to the accommodated plural user flows, and transmit the frames for the reservation bandwidth of each user flow even if the output competition occurs.

Also, the fourth embodiment shows a subtraction model of the tokens in the case of using the token bucket algorithm of the first embodiment. As the subtraction model of the tokens in the case of using the token bucket algorithm according to the second embodiment, when the frame presence flag is 1, and the tokens are smaller than the given value, if there is the first frame arrival notice from the buffer write processor 601, the tokens may be set to the given value. As the subtraction model of the tokens in the case of using the token bucket algorithm according to the third embodiment, when the frame transmission is enabled if the tokens as large as the frame length transmitted from the maximum value of the bucket is subtracted, and the tokens are subtracted to the frame length or more from the maximum value of the bucket, if there is the first frame arrival notice from the buffer write processor 2601, the tokens may be set to a value obtained by subtracting the frame length from the maximum value of the buckets.

## Claims

1. A communication device connected to a network, comprising:
an input interface that receives a frame;
an output frame buffer (310) that holds the frame received by the input interface;
a plurality of bandwidth controllers (1603) that controls a read request notice timing of the frame received by the input interface for each flow;
an output scheduler (605) that determines a read timing of the frame on the basis of a frame read request of each flow notified by the bandwidth controllers (1603); and
an output interface that outputs the frame in the timing notified by the output scheduler (605),
wherein each of the bandwidth controllers (1603) determines on the basis of a token value held by each flow, whether the output scheduler (605) is notified of the read request of the flow, or not, and determines the amount of adding or subtracting the token value on the basis of the accumulated number of frames in the output frame buffer (310).

2. The communication device according to claim 1, wherein each of the bandwidth controllers (1603) includes:
a token number holding unit (701) that holds the number of tokens for each flow;
a token adder (703) that periodically adds a given number of tokens to the token number holding unit (701) for each flow;
a token number determination unit (708) that determines whether or not the output scheduler (605) is notified of the read request of the flow on the basis of the number of tokens held by the token number holding unit (701);
a token subtraction unit (702) that subtracts from the tokens in the token number holding unit (701) when the frame held in the output frame buffer (310) is read by the output interface; and
an accumulative token number controller (705) that determines the addition number of tokens on the basis of the accumulated number of the frames in the output frame buffer (310).

3. The communication device according to claim 2,
wherein the token number determination unit (708) notifies the output scheduler (605) of the read request when the tokens are accumulated in the token number holding unit (701) up to a specific value set for each flow or more.

4. The communication device according to claim 2 or 3,
wherein the accumulative token number controller (705) changes an addition upper limit of the addition number of tokens added to the token number holding unit (701) according to whether the frame is stored in the output frame buffer (310), or not.

5. The communication device according to at least one of claims 2 to 4,
wherein the accumulative token number controller (705) does not add the tokens up to the given value or more when the frame is not stored in the output frame buffer (310).

6. The communication device according to claim 2 or 3,
wherein the accumulative token number controller (705) sets an addition upper limit of the token value when the frame is not stored in the output frame buffer (310) to a value smaller than the addition upper limit of the token value when the frame is stored in the output frame buffer (310).

7. The communication device according to claim 3,
wherein the accumulative token number controller (705) sets the token value held by the token number holding unit (701) to the token value of the specific value if the frame is newly stored in the output frame buffer when no previous frame is stored in the output frame buffer (310).

8. The communication device according to at least one of claims 2 to 6,
wherein the accumulative token number controller (705) subtracts, from the token value held in the token number holding unit (701), the tokens or more corresponding to the frame length of the frame held in the output frame buffer (310) and read by the output interface.

9. The communication device according to at least one of claims 2 to 8,
wherein the token adder (703) periodically adds a given number of tokens according to a reservation bandwidth of the flow.

10. The communication device according to claim 1, further comprising:
a token number holding unit (701) that holds the number of tokens for each flow;
a token adder (703) that periodically adds a given number of tokens to the token number holding unit (701) for each flow;
a token number determination unit (708) that notifies the output scheduler (605) of the read request of the flow if the tokens are held by the token number holding unit (701) up to the token value corresponding to a frame length of the frame that is to be subsequently notified to the output scheduler (605) by the read request;
a token subtractor that subtracts from the tokens of the token number holding unit (701) when the frames held in the output frame buffer (310) are read from the output interface; and
an accumulative token number controller (705) that determines the addition number of tokens on the basis of the accumulated number of the frames in the output frame buffer (310).

11. The communication device according to claim 8,
wherein the accumulative token number controller (705) sets the token value held by the token number holding unit (701) to a token value corresponding to the frame length of the frame newly stored if the frame is newly stored in the output frame buffer (310) when no previous frame is stored in the output frame buffer (310).

12. The communication device according to claim 8,
wherein the accumulative token number controller (705) subtracts, from the token value held by the token number holding unit (701), the tokens or more corresponding to the frame length of the frame newly stored if the frame is newly stored in the output frame buffer (310) when no previous frame is stored in the output frame buffer (310).

13. The communication device according to claim 1,
wherein each of the bandwidth controllers (1603) includes:
a token number holding unit (701) that holds the number of tokens for each flow;
a token subtractor that periodically subtracts a given number of tokens from the token number holding unit (701) for each flow;
a token number determination unit (708) that determines whether the output scheduler (605) is notified of the read request of the flow on the basis of the number of tokens held by the token number holding unit (701);
a token adder (703) that adds to the tokens of the token number holding unit (701) when the frame held in the output frame buffer (310) is read from the output interface; and
an accumulative token number controller (705) that determines the subtraction number of the token value on the basis of the accumulated number of the frames in the output frame buffer (310).

14. A bandwidth control method for controlling a transmission timing of a received frame in a communication device, comprising the steps of:
storing a plurality of received flows in an output frame buffer (310) for each flow;
determining whether or not an output scheduler (605) is notified of a read request of the flow on the basis of a token value held for each flow; and
determining an addition or subtraction number of tokens on the basis of the accumulated number of the frames in the output frame buffer (310).

15. The bandwidth control method according to claim 14, further comprising the steps of:
holding the number of tokens for each flow by a token number holding unit (701);
periodically adding a given number of tokens to the token number holding unit (701) for each flow;
notifying the output scheduler (605) of the read request of the flow on the basis of the number of tokens held by the token number holding unit (701);
subtracting the tokens in the token number holding unit (701) when the flow is read; and
determining the addition or subtraction number of tokens on the basis of the accumulated number of the frames in the output frame buffer (310).

16. The bandwidth control method according to claim 14 or 15, further comprising the step of:
setting an addition upper limit of the token value when the frame is not stored in the output frame buffer (310) to a value smaller than the addition upper limit of the token value when the frame is stored in the output frame buffer (310).
